(19) Europäisches Patentamt / European Patent Office / Office européen des brevets

(11) **EP 4 033 285 A1**

(12) **EUROPEAN PATENT APPLICATION**
published in accordance with Art. 153(4) EPC

(43) Date of publication:
**27.07.2022 Bulletin 2022/30**

(21) Application number: **19953530.3**

(22) Date of filing: **19.11.2019**

(51) International Patent Classification (IPC):
**G02B 13/00** (2006.01)          **G02B 13/18** (2006.01)
**G02B 27/00** (2006.01)          **G02B 3/04** (2006.01)
**G02B 9/64** (2006.01)

(52) Cooperative Patent Classification (CPC):
**G02B 3/04; G02B 9/64; G02B 13/00; G02B 13/18; G02B 27/00**

(86) International application number:
**PCT/CN2019/119458**

(87) International publication number:
**WO 2021/097670 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TIANJIN OFILM OPTO ELECTRONICS CO., LTD**
**Tianjin, 300385 (CN)**

(72) Inventors:
• **LE, Yuming**
  **Tianjin 300385 (CN)**
• **LAN, Binli**
  **Tianjin 300385 (CN)**
• **ZHOU, Rui**
  **Tianjin 300385 (CN)**

(74) Representative: **Inchingalo, Simona**
**Bugnion S.p.A.**
**Viale Lancetti, 17**
**20158 Milano (IT)**

(54) **OPTICAL LENS GROUP FOR IMAGING, CAMERA MODULE AND TERMINAL**

(57)  The embodiments of the present application disclose an optical lens group for imaging, a camera module and a terminal, and belong to the technical field of optical imaging; the optical lens group comprises a first lens, a second lens, a third lens, a fourth lens, a fifth lens, a sixth lens and a seventh lens which are sequentially arranged along an optical axis from an object surface to an image surface; wherein, the first lens, the third lens and the seventh lens all have negative refractive power; and the second lens and the sixth lens both have positive refractive power. The camera formed by the optical lens group of the embodiment of the present application has the advantages of wide viewing angle, low sensitivity, miniaturization, high imaging quality and the like.

FIG. 1

**Description**

**TECHNICAL FIELD**

The present application relates to the technical field of optical imaging, in particular to an optical lens group for imaging, a camera module and a terminal.

**BACKGROUND**

Cameras have been widely used in mobile phones, vehicles, monitoring, security, medical, and other fields. However, with the development of science and technology, higher and higher demands for cameras rise on market. For example, with the continuous development of technology in the automotive industry, higher and higher demands for in-vehicle cameras for advanced driving assistant system (ADAS), reversing images and the like, rise on market. The cameras for the ADAS and the reversing images are expected to have high-definition characteristics, in order to ensure the driver's safe driving during driving and reversing. However, the imaging effect of the camera in the prior art is poor, and it is difficult to meet the market demands.

**SUMMARY**

Embodiments of the present application provide an optical lens group for imaging, a camera module, and a terminal, which can solve the problem of poor imaging effect of the camera in the prior art. The technical solutions are as follows.

In a first aspect, an embodiment of the present application provide an optical lens group for imaging including, successively in order from an object side to an image side along an optical axis: a first lens, a second lens, a third lens, a fourth lens, a fifth lens, a sixth lens and a seventh lens.

The first lens, the third lens and the seventh lens have negative refractive powers.

The second lens and the sixth lens have positive refractive powers.

The embodiment of the present application has beneficial effects as follows. The first lens adjacent to the object side in the optical lens group is arranged to have the negative refractive power, such that large-angle light can be incident into the system, and the camera including this optical lens group can have the characteristics of wide viewing angle, low sensitivity and miniaturization. The second lens is arranged to have the positive refractive power, such that coma aberration caused by marginal light beams can be suppressed, which facilitates the aberration correction. The third lens is arranged to have the negative refractive power, such that the high-order aberrations of the system can be well corrected, and the camera including the optical lens group can be ensured to have higher imaging quality. The sixth lens is arranged to have the positive refractive power, such that the camera including the optical lens group has the characteristics of high imaging quality and low sensitivity, which reduces the overall length of the system. The seventh lens is arranged to have the negative refractive power, such that a larger optical back focal length can be obtained, and the sensitivity can be reduced. The optical lens group according to the embodiment of the present application includes the first lens, the second lens, the third lens, the fourth lens, the fifth lens, the sixth lens and the seventh lens, such that the camera formed by the optical lens group can have advantages of wide viewing angle, low sensitivity, miniaturization, high imaging quality and the like.

Further, an image side surface of the fourth lens and an object side surface of the fifth lens are cemented, such that the fourth lens and the fifth lens form a cemented lens.

The above further solution has beneficial effects as follows. The composability of the product can be improved, the performance unevenness can be suppressed, and the manufacture yield can be improved.

Further, a curvature radius of the image side surface of the fourth lens at the optical axis is positive, and a curvature radius of the object side surface of the fifth lens at the optical axis is positive.

The above further solution has beneficial effects as follows. The magnification chromatic aberration can be effectively corrected, and the system aberration can be corrected.

Further, a combined focal length of the cemented lens is $f_{45}$, a focal length of the optical lens group is $f$; $f_{45}$ and $f$ satisfy the following condition:

$$0 < f_{45}/f < 20.$$

The above further solution has beneficial effects as follows. The ratio of the combined focal length of the cemented lens to the focal length of the optical lens group is configured to satisfy: $0 < f_{45}/f < 20$, such that the cemented lens formed by the fourth lens and the fifth lens has the positive refracting power, and has characteristics of enlarging the angle of field of view of the system, and reducing the sensitivity. When the ratio of the combined focal length of the cemented lens to the focal length of the optical lens group exceeds the upper limit of 20, it will be disadvantageous to widen the width of the light beam incident to the pupil, resulting in insufficient imaging resolution in the edge field of view of the image plane.

Further, an refractive index of the fourth lens is $nd_4$, an Abbe number of the fourth lens is $vd_4$; $nd_4$, and $vd_4$ satisfy the following conditions:

$$nd_4 > 1.65 ;$$

$$vd_4 < 64 .$$

The above further solution has beneficial effects as follows. The refractive index of the fourth lens is configured to satisfy $nd_4 > 1.65$, and the Abbe number of the fourth lens is configured to satisfy $vd_4 < 64$, such that it is beneficial to correct the off-axis chromatic aberration, thereby improving the system resolution. When the refractive index of the fourth lens is lower than the lower limit of 1.65, it is not beneficial to the deflection of the edge ray, and which is easy to cause edge aberration. When the Abbe number of the fourth lens exceeds the upper limit of 64, the correction of chromatic aberration is insufficient, which will cause color distortion in the edge field of view, and which is not beneficial to imaging.

Further, an refractive index of the fifth lens is $nd_5$, an Abbe number of the fifth lens is $vd_5$; $nd_5$ and $vd_5$ satisfy the following conditions:

$$nd_5 > 1.65;$$

$$vd_5 < 64.$$

The above further solution has beneficial effects as follows. The refractive index of the fifth lens is configured to satisfy $nd_5 > 1.65$, and the Abbe number of the fifth lens is configured to satisfy $vd_5 < 64$, such that it is beneficial to correct the off-axis chromatic aberration, thereby improving the system resolution. When the refractive index of the fourth lens is lower than the lower limit of 1.65, it is not beneficial to the deflection of the edge ray, and which is easy to cause edge aberration. When the Abbe number of the fifth lens exceeds the upper limit of 64, the correction of chromatic aberration is insufficient, which will cause color distortion in the edge field of view, and which is not beneficial to imaging.

Further, an refractive index of the fourth lens is $nd_4$, an refractive index of the fifth lens is $nd_5$; $nd_4$, and $nd_5$ satisfy the following conditions:

$$\left| nd_4 - nd_5 \right| < 0.1.$$

The above further solution has beneficial effects as follows. By controlling the absolute value of the difference between the refractive indexes of the fourth lens and the fifth lens to be within 0.1, it is beneficial to reduce the probability of ghost images occurring in the cemented surface of the fourth lens and the fifth lens. When the absolute value of the difference between the refractive indexes of the fourth lens and the fifth lens exceeds the upper limit of 0.1, the difference between the refractive indexes of the fourth lens and the fifth lens is relatively large, which may easily lead to enhanced reflectivity of the cemented surface, and the presence of the surface with high reflectivity will increase the probability and intensity of the occurrence of ghost images.

Further, the fourth lens has a negative refractive power, an focal length of the fourth lens is $f_4$, a focal length of the optical lens group is $f$; $f_4$ and $f$ satisfy the following condition:

$$f_4/f > -3.$$

The above further solution has beneficial effects as follows. The fourth lens is arranged to have the negative refractive power, and the ratio of the focal length of the fourth lens to the focal length of the optical lens group is configured to satisfy: $f_4/f > -3$, such that it is possible to provide the negative refractive power for the system, and excellently correct axial chromatic aberration. When the ratio of the focal length of the fourth lens to the focal length of the optical lens group is lower than the lower limit of -3, it is disadvantageous to widen the width of the light beam incident to the pupil, resulting in insufficient imaging resolution in the edge field of view of the image plane.

Further, the fifth lens has a positive refractive power, an focal length of the fifth lens is $f_5$ , a focal length of the optical lens group is f ; $f_5$ and f satisfy the following condition:

$$f_5/f < 2.0.$$

The above further solution has beneficial effects as follows. The fifth lens is arranged to have the positive refractive power, and the ratio of the focal length of the fifth lens to the focal length of the optical lens group is configured to satisfy: $f_5/f$ <2.0, such that it is possible to provide the positive refractive power for the system, and correct system aberrations well. When the ratio of the focal length of the fifth lens to the focal length of the optical lens group exceeds the upper limit of 2.0, it is disadvantageous to widen the width of the light beam incident to the pupil, resulting in insufficient imaging resolution in the edge field of view of the image plane.

Further, a focal length of the first lens is $f_1$, a focal length of the optical lens group is f ; $f_1$ and f satisfy the following condition:

$$-3 < f_1/f < -1.$$

The above further solution has beneficial effects as follows. The ratio of the focal length of the first lens to the focal length of the optical lens group is configured to satisfy: $-3 < f_1/f < -1$, and the first lens adjacent to the object side is arranged as the negative lens, which can provide the negative refractive power for the system, such that large-angle light can be incident into the system, and the camera including this optical lens group can have the characteristics of wide viewing angle, low sensitivity and miniaturization.

Further, a focal length of the second lens is $f_2$ , a focal length of the optical lens group is f ; $f_2$ and f satisfy the following condition:

$$f_2/f < 5.$$

The above further solution has beneficial effects as follows. The ratio of the focal length of the second lens to the focal length of the optical lens group is configured to satisfy: $f_2/f < 5$, such that it can provide the positive refractive power for the system. In addition, by controlling the refractive power of the second lens, coma aberration caused by marginal light beams can be suppressed, which facilitates the aberration correction.

Further, a focal length of the third lens is $f_3$, a focal length of the optical lens group is f ; $f_3$ and f satisfy the following condition:

$$f_3/f > -5.$$

The above further solution has beneficial effects as follows. The ratio of the focal length of the third lens to the focal length of the optical lens group is configured to satisfy: $f_3/f > -5$, such that it can provide the negative refractive power for the system, correct the high-order aberrations of the system, and enable the camera including the optical lens group to have higher imaging quality.

Further, a focal length of the sixth lens is $f_6$ , a focal length of the optical lens group is f ; $f_6$ and f satisfy the following condition:

$$0 < f_6/f < 5.$$

The above further solution has beneficial effects as follows. The ratio of the focal length of the sixth lens to the focal length of the optical lens group is configured to satisfy: $0 < f_6/f < 5$, such that it can provide the positive refractive power for the system. By controlling the refractive power of the sixth lens, the camera including the optical lens group has the characteristics of high imaging quality and low sensitivity, which reduces the overall length of the system.

Further, a focal length of the seventh lens is $f_7$ , a focal length of the optical lens group is f ; $f_7$ and f satisfy the following condition:

$$f_7/f > -8.$$

The above further solution has beneficial effects as follows. The ratio of the focal length of the seventh lens to the focal length of the optical lens group is configured to satisfy: $f_7/f > -8$, such that it can provide the negative refractive power for the system, obtain a larger optical back focal length, and reduce the sensitivity. When the ratio of the focal length of the seventh lens to the focal length of the optical lens group is lower than the lower limit of -8, it is disadvantageous to reduce the incident angle of the light incident into the image plane, thereby reducing the sensitivity of an imaging photosensitive element to the light.

Further, a diagonal length of an effective pixel area on the image plane is ImgH, an angle of field of view in a diagonal direction of the optical lens group is FOV;

ImgH and FOV satisfy the following condition:

$$0.1 < \left[\mathrm{Tan}\left(\mathrm{FOV}/2\right)\right]/\left(\mathrm{ImgH}/2\right) < 0.5.$$

The above further solution has beneficial effects as follows. The diagonal length of the effective pixel area on the image plane and the angle of field of view in the diagonal direction of the optical lens group are configured to satisfy: $0.1 < [\mathrm{Tan}(\mathrm{FOV}/2)]/(\mathrm{ImgH}/2) < 0.5$, such that it can ensure that the system has high pixels and can obtain a better wide-angle capturing effect. When the diagonal length of the effective pixel area on the image plane and the angle of field of view in the diagonal direction of the optical lens group are above the range of the above condition, it is not beneficial to the wide-angle and high-pixel characteristics of the imaging system.

Further, in a range of 20°C to 40°C, a temperature coefficient of a refractive index of the sixth lens is |dn/dt|; |dn/dt| satisfies the following condition:

$$\left|dn/dt\right| \leq 8.5.$$

The above further solution has beneficial effects as follows. The temperature coefficient of the refractive index of the sixth lens in the range of 20°C to 40°C is configured to satisfy: $|dn/dt| \leq 8.5$, such that it can reduce the sensitivity of the system to temperature, and ensure that the system can still maintain good imaging quality in a wide temperature range. When the refractive index of the sixth lens is above the range of the above condition, since the refractive index of the material changes due to temperature, and the system will reduce the imaging clarity because there is no corresponding compensation for the temperature, which is not beneficial for the optical imaging system to still maintain a good imaging resolution capability when being used in environments with large temperature gradients.

Further, in a range of -30°C to 70°C, an average linear expansion coefficient of the lens with a refractive power in the optical lens group is $\alpha_i$; where i is a serial number of the lens in the optical lens group counted from a side of the object side; $\alpha_i$ satisfies the following conditions:

$$\mathrm{Min}\,\alpha_i > 50;$$

$$\mathrm{Max}\,\alpha_i < 150.$$

The above further solution has beneficial effects as follows. The average linear expansion coefficient of the lens with the refractive power in the optical lens group in a range of -30°C to 70°C is configured to satisfy: $\mathrm{Min}\,\alpha_i > 50$; $\mathrm{Max}\,\alpha_i < 150$, such that it can reduce the sensitivity of the system to temperature and ensure that the system can maintain good imaging quality in a wide temperature range. When the average linear expansion coefficient of the lens is above the range of the above condition, the material will be deformed due to temperature, which will reduce the imaging clarity, and which is not beneficial for the optical imaging system to still maintain a good imaging resolution capability when being used in the environment with the large temperature gradient.

Further, a focal length of the optical lens group is f, an optical back focal length of the optical lens group is BFL; f and BFL satisfy the following condition:

$$0 < \mathrm{BFL}/f < 3.$$

The above further solution has beneficial effects as follows. The ratio of the focal length to the optical back focus of the optical lens group is configured to satisfy: 0 < BFL/f < 3 , such that the sensitivity of the system can be reduced. When the ratio of the focal length to the optical back focus of the optical lens group is above the range of the above condition, the back focal length of the system will be too long, which is not beneficial to the miniaturization characteristic.

Further, a diagonal length of an effective pixel area on the image plane is ImgH, a total track length of the optical lens group is TTL ; ImgH and TTL satisfy the following condition:

$$\mathrm{ImgH}/\mathrm{TTL} > 0.1.$$

The above further solution has beneficial effects as follows. The ratio of the diagonal length of the effective pixel area on the image plane to the total track length of the optical lens group is configured to satisfy: ImgH/TTL > 0.1, such that it can not only ensure the high pixel and the imaging quality of the system, but also control the total track length, and the volume of the camera including the optical lens group can be minimized. When the ratio of the diagonal length of the effective pixel area on the image plane to the total track length is less than the lower limit of 0.1, the resolution of the imaging system will be reduced, which is not beneficial to the miniaturization characteristic of the system.

Further, a focal length of the optical lens group is f , an entrance pupil diameter of the optical lens group is EPD ; f and EPD satisfy the following condition:

$$\mathrm{f}/\mathrm{EPD} \leq 2.4.$$

The above further solution has beneficial effects as follows. The ratio of the focal length to the entrance pupil diameter of the optical lens group is configured to satisfy: f/EPD ≤ 2.4, such that a larger entrance pupil can be provided, the aperture can be enlarged, which is beneficial to improving the imaging quality, while enlarging the use time and space of the carrier. When the ratio of the focal length to the entrance pupil diameter of the optical lens group exceeds the upper limit of 2.4, it is not beneficial to the imaging depth of the system, and the brightness of the field of view is insufficient, which will reduce the clarity of the imaging system.

In a second aspect, an embodiment of the present application provide a camera module including: the optical lens group according to any one of above; and an image sensor.

The optical lens group is configured to receive a light signal of a subject and project the light signal to the image sensor. The image sensor is configured to convert the light signal into an image signal.

The embodiment of the present application has beneficial effects as follows. The first lens adjacent to the object side in the optical lens group is arranged to have the negative refractive power, such that large-angle light can be incident into the system, and the camera including this optical lens group can have the characteristics of wide viewing angle, low sensitivity and miniaturization. The second lens is arranged to have the positive refractive power, such that coma aberration caused by marginal light beams can be suppressed, which facilitates the aberration correction. The third lens is arranged to have the negative refractive power, such that the high-order aberrations of the system can be well corrected, and the camera including the optical lens group can be ensured to have higher imaging quality. The sixth lens is arranged to have the positive refractive power, such that the camera including the optical lens group has the characteristics of high imaging quality and low sensitivity, which reduces the overall length of the system. The seventh lens is arranged to have the negative refractive power, such that a larger optical back focal length can be obtained, and the sensitivity can be reduced. The optical lens group according to the embodiment of the present application includes the first lens, the second lens, the third lens, the fourth lens, the fifth lens, the sixth lens and the seventh lens, such that the camera formed by the optical lens group can have advantages of wide viewing angle, low sensitivity, miniaturization, high imaging quality and the like.

In a third aspect, the embodiments of the present application provide a terminal, including the camera module as described above.

The embodiment of the present application has beneficial effects as follows. The first lens adjacent to the object side in the optical lens group is arranged to have the negative refractive power, such that large-angle light can be incident into the system, and the camera including this optical lens group can have the characteristics of wide viewing angle, low sensitivity and miniaturization. The second lens is arranged to have the positive refractive power, such that coma aberration caused by marginal light beams can be suppressed, which facilitates the aberration correction. The third lens is arranged to have the negative refractive power, such that the high-order aberrations of the system can be well corrected, and the camera including the optical lens group can be ensured to have higher imaging quality. The sixth lens is arranged to have the positive refractive power, such that the camera including the optical lens group has the characteristics of high imaging quality and low sensitivity, which reduces the overall length of the system. The seventh lens is arranged to have the negative refractive power, such that a larger optical back focal length can be obtained, and the sensitivity can be reduced. The optical lens group according to the embodiment of the present application includes the first lens, the second lens, the third lens, the fourth lens, the fifth lens, the sixth lens and the seventh lens, such that the camera formed by the optical lens group can have advantages of wide viewing angle, low sensitivity, miniaturization, high imaging quality and the like.

**BRIEF DESCRIPTION OF THE DRAWINGS**

In order to more clearly illustrate the embodiments of the present application or the technical solutions in the prior art, the accompanying drawings that are used in the description of the embodiments or the prior art are briefly introduced below. Apparently, the drawings in the following description are only some embodiments of the present application. For those of ordinary skill in the art, other drawings can also be obtained based on these drawings without any creative effort.

FIG. 1 is a schematic view of an optical lens group for imaging according to a first embodiment of the present application.
FIG. 2 is an aberration graph of the optical lens group for imaging according to the first embodiment of the present application.
FIG. 3 is a field curve graph of the optical lens group for imaging according to the first embodiment of the present application.
FIG. 4 is a distortion graph of the optical lens group for imaging according to the first embodiment of the present application.
FIG. 5 is a schematic view of an optical lens group for imaging according to a second embodiment of the present application.
FIG. 6 is an aberration graph of the optical lens group for imaging according to the second embodiment of the present application.
FIG. 7 is a field curve graph of the optical lens group for imaging according to the second embodiment of the present application.
FIG. 8 is a distortion graph of the optical lens group for imaging according to the second embodiment of the present application.
FIG. 9 is a schematic view of an optical lens group for imaging according to a third embodiment of the present application.
FIG. 10 is an aberration graph of the optical lens group for imaging according to the third embodiment of the present application.
FIG. 11 is a field curve graph of the optical lens group for imaging according to the third embodiment of the present application.
FIG. 12 is a distortion graph of the optical lens group for imaging according to the third embodiment of the present application.
FIG. 13 is a schematic view of an optical lens group for imaging according to a fourth embodiment of the present application.
FIG. 14 is an aberration graph of the optical lens group for imaging according to the fourth embodiment of the present application.
FIG. 15 is a field curve graph of the optical lens group for imaging according to the fourth embodiment of the present application.
FIG. 16 is a distortion graph of the optical lens group for imaging according to the fourth embodiment of the present application.
FIG. 17 is a schematic view of an optical lens group for imaging according to a fifth embodiment of the present application.
FIG. 18 is an aberration graph of the optical lens group for imaging according to the fifth embodiment of the present application.
FIG. 19 is a field curve graph of the optical lens group for imaging according to the fifth embodiment of the present application.
FIG. 20 is a distortion graph of the optical lens group for imaging according to the fifth embodiment of the present application.
FIG. 21 is a schematic view of an optical lens group for imaging according to a sixth embodiment of the present application.
FIG. 22 is an aberration graph of the optical lens group for imaging according to the sixth embodiment of the present application.
FIG. 23 is a field curve graph of the optical lens group for imaging according to the sixth embodiment of the present application.
FIG. 24 is a distortion graph of the optical lens group for imaging according to the sixth embodiment of the present application.
FIG. 25 is a schematic view of an optical lens group for imaging according to a seventh embodiment of the present application.
FIG. 26 is an aberration graph of the optical lens group for imaging according to the seventh embodiment of the present application.
FIG. 27 is a field curve graph of the optical lens group for imaging according to the seventh embodiment of the present application.
FIG. 28 is a distortion graph of the optical lens group for imaging according to the seventh embodiment of the present application.

## DETAILED DESCRIPTION OF THE EMBODIMENTS

In order to make the objectives, technical solutions and advantages of the present application clearer, the embodiments of the present application will be further described in detail below with reference to the accompanying drawings.

When the following description refers to the drawings, the same numerals in different drawings refer to the same or similar elements, unless otherwise indicated. The implementations described in the illustrative embodiments below are not intended to indicate all implementations consistent with this application. Rather, they are merely examples of devices and methods consistent with some aspects of the present application, as recited in the appended claims.

Hereinafter, aberrations involved in the embodiments of the present application are firstly explained. The aberration refers to a deviation of a result obtained by non-paraxial ray tracing from ideal conditions of Gaussian optics (first-order approximation theory or paraxial rays) in the optical system, where the result obtained by non-paraxial ray tracing is inconsistent with a result obtained by paraxial ray tracing. The Aberration is divided into two categories of chromatic aberration (or chromatism) and monochromatic aberration. The chromatic aberration is an aberration generated due to different refractive indexes when light of different wavelengths transmits through a lens, because the refractive index of the material used to make the lens is a function of the wavelength. The chromatic aberration can be divided into two types of positional chromatic aberration and magnification chromatic aberration. The chromatic aberration is a kind of dispersion phenomenon. The so-called dispersion phenomenon refers to a phenomenon that the speed of light or the refractive index of the light in the medium changes with the wavelength of the light wave. The dispersion in which the refractive index of the light decreases with the increase of the wavelength can be called a normal dispersion, and the dispersion in which the refractive index increases with the increase of the wavelength can be called a negative dispersion (or negative anomalous dispersion). The monochromatic aberration refers to the aberration that occurs even in highly monochromatic light. According to the effect, the monochromatic aberration is divided into two categories of "blurring the imaging" and "distorting the imaging"; where the former category includes spherical aberration, astigmatism and the like, and the latter category includes field curvature, distortion and the like. The aberration further includes a coma, which refers to a comet-shaped spot with a bright tail formed by emitting a monochromatic conical beam to the optical system from an off-axis object point located outside the main axis, and then refracting it by the optical system, which cannot form a clear point at the ideal plane.

In a first aspect, an embodiment of the present application provides an optical lens group for imaging including a first lens 110, a second lens 120, a third lens 130, a fourth lens 140, a fifth lens 150, a sixth lens 160, and a seventh lens 170. The first lens 110, the second lens 120, the third lens 130, the fourth lens 140, , a fifth lens 150, a sixth lens 160, and a seventh lens 170 are arranged successively in order from an object side to an image side along an optical axis.

The first lens 110 has a negative refractive power. A curvature radius of an object side surface of the first lens 110 at the optical axis is positive, and a curvature radius of an image side surface of the first lens 110 at the optical axis is positive. A focal length of the first lens 110 is $f_1$ , a focal length of the optical lens group is $f$ ; $f_1$ and $f$ satisfy the following condition: $-3 < f_1/f < -1$. The first lens 110 is adjacent to the object side. The first lens 110 adjacent to the object side is arranged as a negative lens, and the focal length of the first lens 110 satisfies the above condition, which can provide negative refractive power for the system, such that large-angle light can be incident into the system, and the camera including this optical lens group can have the characteristics of wide viewing angle, low sensitivity and miniaturization.

The second lens 120 has a positive refractive power. A curvature radius of an object side surface of the second lens 120 at the optical axis is positive, and a curvature radius of an image side surface of the second lens 120 at the optical axis is negative. An focal length of the second lens 120 is $f_2$ , the focal length of the optical lens group is $f$ ; $f_2$ and $f$ satisfy the following condition: $f_2/f < 5$. The second lens 120 is arranged as a positive lens, and the focal length of the second lens 120 satisfies the above condition, such that it can provide a positive refractive power for the system. In addition, by controlling the refractive power of the second lens 120, coma aberration caused by marginal light beams can be suppressed, which facilitates the aberration correction.

The third lens 130 has a negative refractive power. A curvature radius of an object side surface of the third lens 130 at the optical axis is negative, and a curvature radius of an image side surface of the third lens 130 at the optical axis is positive. An focal length of the third lens 130 is $f_3$, the focal length of the optical lens group is f ; $f_3$ and f satisfy the following condition: $f_3/f > - 5$. The third lens 130 is arranged as a negative lens, and the focal length of the third lens 130 satisfies the above condition, such that it can provide a negative refractive power for the system, correct the high-order aberrations of the system, and enable the camera including the optical lens group to have higher imaging quality.

The fourth lens 140 has a negative refractive power. A curvature radius of an object side surface of the fourth lens 140 at the optical axis is negative, and a curvature radius of an image side surface of the fourth lens 140 at the optical axis is positive. An focal length of the fourth lens 140 is $f_4$, the focal length of the optical lens group is f ; $f_4$ and f satisfy the following condition: $f_4/f > -3$. The fourth lens 140 is arranged as a negative lens, and the focal length of the fourth lens 140 satisfies the above condition, such that it is possible to excellently correct axial chromatic aberration. When the ratio of the focal length of the fourth lens 140 to the focal length of the optical lens group is lower than the lower limit of -3, it is disadvantageous to widen the width of the light beam incident to the pupil, resulting in insufficient imaging resolution in the edge field of view of the image plane.

The fifth lens 150 has a positive refractive power. A curvature radius of an object side surface of the fifth lens 150 at the optical axis is positive, a curvature radius of an image side surface of the fifth lens 150 at the optical axis is negative. An focal length of the fifth lens 150 is $f_5$, the focal length of the optical lens group is f ; $f_5$ and f satisfy the following condition: $f_5/f < 2.0$. The fifth lens 150 is arranged to have the positive refractive power, and the focal length of the fifth lens 150 satisfies the above condition, such that it is possible to correct system aberrations. When the ratio of the focal length of the fifth lens 150 to the focal length of the optical lens group exceeds the upper limit of 2.0, it is disadvantageous to widen the width of the light beam incident to the pupil, resulting in insufficient imaging resolution in the edge field of view of the image plane.

The sixth lens 160 has a positive refractive power. A curvature radius of an object side surface of the sixth lens 160 at the optical axis is positive, and a curvature radius of an image side surface of the sixth lens 160 at the optical axis is negative. An focal length of the sixth lens 160 is $f_6$, the focal length of the optical lens group is f; $f_6$ and f satisfy the following condition: $0 < f_6/f < 5$. The sixth lens 160 is arranged as a positive lens, and the focal length of the sixth lens 160 satisfies the above condition, such that it can provide a positive refractive power for the system. By controlling the refractive power of the sixth lens 160, the camera including the optical lens group has the characteristics of high imaging quality and low sensitivity, which reduces the overall length of the system.

The seventh lens 170 has a negative refractive power. A curvature radius of an object side surface of the seventh lens 170 at the optical axis is negative, and a curvature radius of an image side surface of the seventh lens 170 at the optical axis is negative, or the image side surface is flat. An focal length of the seventh lens 170 is $f_7$, the focal length of the optical lens group is f ; $f_7$ and f satisfy the following condition: $f_7/f > - 8$. The seventh lens 170 is arranged as a negative lens, and the focal length of the seventh lens 170 satisfies the above condition, such that it can provide a negative refractive power for the system, obtain a larger optical back focal length, and reduce the sensitivity. When the ratio of the focal length of the seventh lens 170 to the focal length of the optical lens group is lower than the lower limit of -8, it is disadvantageous to reduce the incident angle of the light incident into the image plane, thereby reducing the sensitivity of an imaging photosensitive element to the light.

The refractive powers of the above lenses may be the refractive powers of the lenses at the optical axis. The object side surfaces of the above lenses are the surfaces of the lenses on a side facing the object side. The image side surfaces of the lenses are the surfaces of the lenses on a side facing the image side. In the above, the curvature radius of the surface at the optical axis being positive means that the surface is convex toward the object side, and the curvature radius of the surface at the optical axis being negative means that the surface is convex toward the image side.

In order to correct system aberrations and improve the imaging quality of the system, in a plurality of object side surfaces and a plurality of image side surfaces of the first lens 110, the second lens 120, the third lens 130, the fourth lens 140, the fifth lens 150, the sixth lens 160, and the seventh lens 170, at least one surface may be aspherical. For example, the object side surface of the sixth lens 160 may be aspherical, and the image side surface of the sixth lens 160 may also be aspherical. In the above, the surface being aspherical may be that the entire surface of the lens is aspherical. The surface being aspherical may also be that a portion of the surface is aspherical. For example, a portion adjacent to the optical axis may be aspherical.

In order to reduce the manufacturing cost, the first lens 110, the second lens 120, the third lens 130, the fourth lens 140, the fifth lens 150, the sixth lens 160, and the seventh lens 170 can all be made of plastic materials. Certainly, in order to improve the imaging quality, part or all of the first lens 110, the second lens 120, the third lens 130, the fourth lens 140, the fifth lens 150, the sixth lens 160, and the seventh lens 170 may also be made of glass material.

In order to reduce stray light and improve the imaging effect, the optical lens group can further include a stop 180. The stop 180 may be an aperture stop and/or a field stop. The stop 180 can be located between the object side surface of the fourth lens 140 and the object side. For example, the stop 180 may be located between the object side surface of the first lens 110 and the object side, or between the image side surface of the first lens 110 and the object side surface of the second lens 120, or between the image side surface of the second lens 120 and the object side surface of the third lens 130, or between the image side surface of the third lens 130 and the object side surface of the fourth lens 140.

The image side surface of the fourth lens 140 and the object side surface of the fifth lens 150 are cemented, such that the fourth lens 140 and the fifth lens 150 form a cemented lens. The cemented lens is formed by combining the fourth lens 140 with the negative refractive power and the fifth lens 150 with the positive refractive power, and a cemented surface of the cemented lens is formed by cementing the image side surface of the fourth lens 140 with the positive curvature radius at the optical axis and the object side surface of the fifth lens 150 with the positive curvature radius at the optical axis, such that it can effectively correct the magnification chromatic aberration and correct the system aberration. In addition, the fourth lens 140 and the fifth lens 150 are combined to form the cemented lens, such that it can also improve the composability of the product and improve the manufacture yield. The cemented lens has a positive refractive power. A combined focal length of the cemented lens is $f_{45}$, the focal length of the optical lens group is $f$; $f_{45}$ and $f$ satisfy the following condition: $0 < f_{45}/f < 20$. The cemented lens is arranged to have the positive refracting power, and the focal length of the cemented lens satisfies the above condition, such that an angle of field of view of the system can be enlarged, and the sensitivity can be reduced. When the ratio of the combined focal length of the cemented lens to the focal length of the optical lens group exceeds the upper limit of 20, it will be disadvantageous to widen the width of the light beam incident to the pupil, resulting in insufficient imaging resolution in the edge field of view of the image plane.

The image side surface of the fourth lens 140 being cemented with the object side surface of the fifth lens 150 may be that: the entire image side surface of the fourth lens 140 is cemented with the entire object side surface of the fifth lens 150. Certainly, in order to reduce the forming conditions of the fourth lens 140 and the fifth lens 150, the image side surface of the fourth lens 140 and the object side surface of the fifth lens 150 may be cemented together only at the optical axis.

An refractive index of the fourth lens 140 is $nd_4$, an refractive index of the fifth lens 150 is $nd_5$, an Abbe number of the fourth lens 140 is $vd_4$, an Abbe number of the fifth lens 150 is $vd_5$; $nd_4$, $nd_5$, $vd_4$ and $vd_5$ satisfy the following conditions:

$nd_4 > 1.65$; $nd_5 > 1.65$; $|nd_4 - nd_5| < 0.1$; $vd_4 < 64$; $vd_5 < 64$. The refractive indexes and the Abbe numbers of the fourth lens 140 and the fifth lens 150 are reasonably configured as above, such that it is beneficial to correct the off-axis chromatic aberration, thereby improving the system resolution. When the refractive index of the fourth lens 140 or the fifth lens 150 is lower than the lower limit of 1.65, it is not beneficial to the deflection of the edge ray, and which is easy to cause edge aberration. When the Abbe number of the fourth lens 140 or the fifth lens 150 exceeds the upper limit of 64, the correction of chromatic aberration is insufficient, which will cause color distortion in the edge field of view, and which is not beneficial to imaging. By controlling the absolute value of the difference between the refractive indexes of the fourth lens 140 and the fifth lens 150 to be within 0.1, it is beneficial to reduce the probability of ghost images occurring in the cemented surface of the fourth lens 140 and the fifth lens 150. When the absolute value of the difference between the refractive indexes of the fourth lens 140 and the fifth lens 150 exceeds the upper limit of 0.1, the difference between the refractive indexes of the fourth lens 140 and the fifth lens 150 is relatively large, which may easily lead to enhanced reflectivity of the cemented surface, and the presence of the surface with high reflectivity will increase the probability and intensity of the occurrence of ghost images.

A diagonal length of an effective pixel area on the image plane is ImgH, the angle of field of view in the diagonal direction of the optical lens group is FOV; ImgH and FOV satisfy the following condition: $0.1 < [Tan(FOV/2)]/(ImgH/2) < 0.5$. The diagonal length ImgH of the effective pixel area on the image plane and the angle of field of view FOV in the diagonal direction are reasonably configured as above, such that it can ensure that the system has high pixels and can obtain a better wide-angle capturing effect. When the diagonal length of the effective pixel area on the image plane and the angle of field of view in the diagonal direction of the optical lens group are above the range of the above condition, it is not beneficial to the wide-angle and high-pixel characteristics of the imaging system.

In order to reduce the sensitivity of the system to temperature, in a range of 20°C to 40°C, a temperature coefficient of the refractive index of the sixth lens 160 is $|dn/dt|$, in $10^{-6}$/°C, which satisfies the following condition: $|dn/dt| \leq 8.5$. The temperature coefficient of the refractive index of the sixth lens 160 is reasonably configured as above, such that it can reduce the sensitivity of the system to temperature, and ensure that the system can still maintain good imaging quality in a wide temperature range. When the refractive index of the sixth lens 160 is above the range of the above condition, since the refractive index of the material changes due to temperature, and the system will reduce the imaging clarity because there is no corresponding compensation for the temperature, which is not beneficial for the optical imaging system to still maintain a good imaging resolution capability when being used in environments with large temperature gradients. For the imaging system used in the environment with large temperature changes, the definition of the above condition can be used as the variate of at least one lens placed in the imaging system, used to compensate for the effective focal length of the imaging system.

When the temperature coefficient of the refractive index of the sixth lens 160 satisfies the following condition: - 8.5 < dn/dt < - 1 , the effect is better, and the sensitivity of the system to temperature can be minimized.

In order to reduce the sensitivity of the system to temperature, in a range of - 30°C to 70°C, the average linear expansion coefficient $\alpha_i$ of multiple lenses with refractive powers in the optical lens group can also be adopted to satisfy the following conditions: Min $\alpha_i$ > 50 ; Max $\alpha_i$ < 150 . That is, the average linear expansion coefficient $\alpha_i$ of all lenses with refractive powers satisfies the following condition:

50 < $\alpha_i$ < 150; where i is the serial number of the lens in the optical lens group counted from a side of the object side, for example, $\alpha_1$ is the average linear expansion coefficient of the first lens 110. The average linear expansion coefficient of each lens with refractive power in the optical lens group are reasonably configured as above, such that it can reduce the sensitivity of the system to temperature and ensure that the system can maintain good imaging quality in a wide temperature range. When the average linear expansion coefficient of the lens is above the range of the above condition, the material will be deformed due to temperature, which will reduce the imaging clarity, and which is not beneficial for the optical imaging system to still maintain a good imaging resolution capability when being used in the environment with the large temperature gradient.

In order to provide a larger entrance pupil, the focal length f of the optical lens group and an entrance pupil diameter EPD of the optical lens group can satisfy the following condition: f/EPD ≤ 2.4 . The ratio of the focal length to the entrance pupil diameter of the optical lens group is reasonably configured as above, such that a larger entrance pupil can be provided, the aperture can be enlarged, which is beneficial to improving the imaging quality, while enlarging the use time and space of the carrier. When the ratio of the focal length to the entrance pupil diameter of the optical lens group exceeds the upper limit of 2.4, it is not beneficial to the imaging depth of the system, and the brightness of the field of view is insufficient, which will reduce the clarity of the imaging system.

In order to control a total track length, the total track length TTL of the optical lens group and the diagonal length ImgH of the effective pixel area on the image plane can satisfy the following condition: ImgH/TTL > 0.1 . The total track length and the diagonal length of the effective pixel area on the image plane are reasonably configured as above, such that it is possible to not only ensure the high pixel and the imaging quality of the system, but also control the total track length, and a volume of a camera including the optical lens group can be minimized. When the ratio of the diagonal length of the effective pixel area on the image plane to the total track length is less than the lower limit of 0.1, the resolution of the imaging system will be reduced, which is not beneficial to the miniaturization characteristic of the system. The total track length is the distance from the object side surface of the first lens 110 to the image plane on the optical axis.

In order to reduce the sensitivity of the system, the focal length f of the optical lens group and an optical back focal length BFL of the optical lens group can satisfy the following condition: 0 < BFL/f <3 . When the ratio of the focal length to the optical back focus of the optical lens group is above the range of the above condition, the back focal length of the system will be too long, which is not beneficial to the miniaturization characteristic. The optical back focus is the minimum distance from the image side surface of the last lens to the image plane in a direction parallel to the optical axis, that is, the minimum distance from the image side surface of the seventh lens 170 to the image plane in the direction parallel to the optical axis.

In order to filter infrared rays, the optical lens group may further include an infrared filter 200 located between the image side surface of the seventh lens 170 and the image plane.

In order to protect each lens, the optical lens group may further include a protective glass 300 located between the image side surface of the seventh lens 170 and the image plane. When the optical lens group includes both the infrared filter 200 and the protective glass 300, the infrared filter 200 may be located on a side adjacent to the seventh lens 170, and the protective glass 300 may be located on a side adjacent to the image plane.

The camera formed by the optical lens group of the embodiments of the present application has the advantages of wide viewing angle, low sensitivity, miniaturization, high imaging quality, etc.. When used in an advanced driver assistance system (ADAS), the camera can accurately and real-time capture road information (detecting objects, detecting light sources, detecting road signs, etc.) to provide it to the system for image analysis, to ensure the safety of automatic driving. When used in driving records, the camera can provide a clear vision for the driver's driving and ensure the driver's safe driving. When used in monitoring security, the camera can clearly record the detailed information.

The optical lens group for imaging will be described in detail below with reference to specific parameters.

First Embodiment

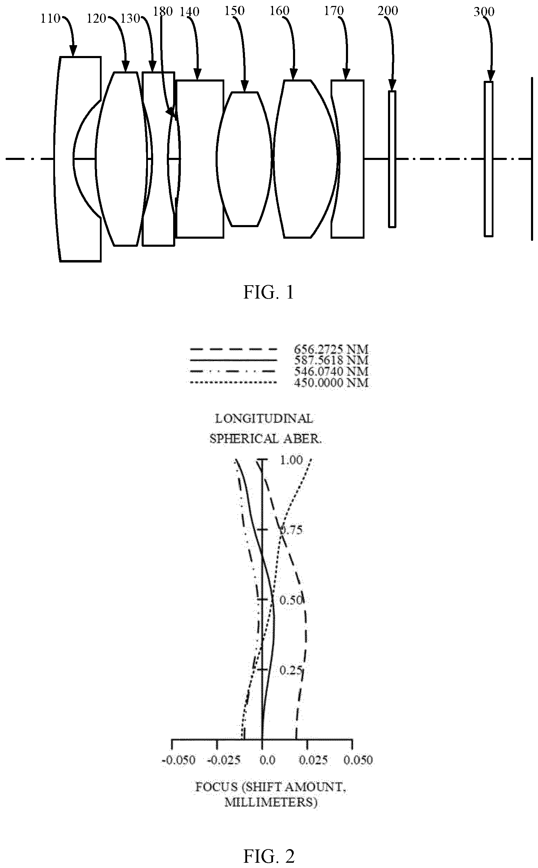

Referring to FIG. 1, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, an infrared filter 200, and a protective glass 300. The relevant parameters of the optical lens group are shown in Table 1. In Table 1, f is a focal length of the optical lens group, FNO indicates an f-number, and 1/2 FOV indicates half of the maximum angle of field of view. The unit of the focal length, the curvature radius and a thickness are all in millimeters.

Table 1

| f= 8.49; FNO= 2.05; 1/2 FOV=35.4 | | | | | | | | |
|---|---|---|---|---|---|---|---|---|
| Surface Number | Surface Name | Surface Shape | Curvature Radius | Thickness | Material | Refractive index | Abbe Number | Focal Length |
| Object side | -- | Spherical | Infinite | 3000 | -- | -- | -- | -- |
| 1 | First L ens | Spherical | 54.7680 | 1.20 | GLASS | 1.517 | 64.2 | -10.643 |
| 2 | | Spherical | 4.9608 | 1.40 | | | | |
| 3 | Second Lens | Spherical | 13.4920 | 3.23 | GLASS | 1.954 | 32.3 | 9.421 |
| 4 | | Spherical | -23.7520 | 0.32 | | | | |
| 5 | Third Lens | Spherical | -11.3450 | 1.00 | GLASS | 1.487 | 70.4 | -13.388 |
| 6 | | Spherical | 15.8110 | 0.50 | | | | |
| 7 | Stop | Spherical | Infinite | 0.25 | -- | -- | -- | -- |
| 8 | Fourth Lens | Spherical | -21.8790 | 2.30 | GLASS | 1.847 | 23.8 | -7.798 |
| 9 | Fifth Lens | Spherical | 9.9119 | 3.46 | GLASS | 1.804 | 46.5 | 6.841 |
| 10 | | Spherical | -10.4390 | 0.12 | | | | |
| 11 | Sixth Lens | Aspherical | 15.2660 | 4.02 | GLASS | 1.589 | 61.2 | 9.194 |
| 12 | | Aspherical | -7.5758 | 0.12 | | | | |
| 13 | Seventh Lens | Spherical | -16.0410 | 1.50 | GLASS | 1.689 | 31.2 | -23.284 |
| 14 | | Spherical | Infinite | 1.60 | | | | |
| 15 | Infrared Filter | Spherical | Infinite | 0.40 | GLASS | 1.517 | 64.2 | - |
| 16 | | Spherical | Infinite | 5.60 | | | | |
| 17 | Protective Glass | Spherical | Infinite | 0.50 | GLASS | 1.517 | 64.2 | - |
| 18 | | Spherical | Infinite | 2.49 | | | | |

As can be seen from Table 1 above, the focal length $f_1$ of the first lens 110 and the focal length f of the optical lens group in the embodiment of the present application satisfy a condition: $f_1/f$ =-1.25. The focal length $f_2$ of the second lens 120 and the focal length f of the optical lens group satisfy a condition: $f_2/f$ =1.11. The focal length $f_3$ of the third lens 130 and the focal length f of the optical lens group satisfy a condition: $f_3/f$ = -1.58. The focal length $f_4$ of the fourth lens 140 and the focal length f of the optical lens group satisfy a condition: $f_4/f$ = -0.92. The focal length $f_5$ of the fifth lens 150 and the focal length f of the optical lens group satisfy a condition: $f_5/f$ =0.81. The focal length $f_6$ of the sixth lens 160 and the focal length f of the optical lens group satisfy a condition: $f_6/f$ =1.08. The focal length $f_7$ of the seventh lens 170 and the focal length f of the optical lens group satisfy a condition: $f_7/f$ = - 2.74. The combined focal length $f_{45}$ of the cemented lens and the focal length f of the optical lens group satisfy a condition: $f_{45}/f$ = 22.75/8.49= 2.68. The refractive index $nd_4$ of the fourth lens 140 satisfy a condition: $nd_4$ =1.847; the refractive index $nd_5$ of the fifth lens 150 satisfy a condition: $nd_5$ = 1.804; and $|nd_4 - nd_5|$ =0.04. The Abbe number $vd_4$ of the fourth lens 140 satisfy a condition: $vd_4$ =23.8. The Abbe number $vd_5$ of the fifth lens 150 satisfy a condition: $vd_5$ =46.5 . The maximum imaging height ImgH of the optical lens group and the angle of field of view FOV of the optical lens group are satisfy a condition:

[Tan(FOV/2)]/(ImgH/2) = Tan(34.5°)/5.145 =0.13 . In a range of 20°C to 40°C, a temperature coefficient |dn/dt| of the refractive index of the sixth lens 160 satisfy a condition: |dn/dt| =4.70. In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ <93. The focal length f of the optical lens group and the entrance pupil diameter EPD of the optical lens group satisfy the following condition: f/EPD = 2.05 . The total track length TTL and the maximum imaging height ImgH of the optical lens group satisfy the following condition: ImgH/TTL = 10.29/30.00 =0.34. The focal length f of the optical lens group and the optical back focal length BFL of the optical system satisfy the following condition:

$$BFL/f = 10.59/8.49 = 1.25 .$$

The surfaces of the lenses of the optical lens group may be aspherical. For these aspherical surfaces, the aspherical expression of the aspherical surface is as follows:

$$Z = \frac{cr^2}{1+\sqrt{1-(1+K)c^2r^2}} + A_4r^4 + A_6r^6 + A_8r^8 + A_{10}r^{10} + A_{12}r^{12} \dots$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 2.

Table 2

| Surface Number | 11 | 12 |
|---|---|---|
| K | -1.68E+01 | -5.09E-01 |
| A4 | 4.42E-04 | 2.18E-04 |
| A6 | -1.47E-05 | -3.15E-06 |
| A8 | 0.00E+00 | 1.37E-08 |
| A10 | 0.00E+00 | -5.16E-09 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 2 is a graph showing the spherical aberration of the light at wavelengths of 450.0000 nm, 546.0740 nm, 587.5618 nm and 656.2725 nm according to the embodiment of the present application. It can be seen from FIG. 2 that the spherical aberrations corresponding to the wavelengths of 450.0000 nm, 546.0740 nm, 587.5618 nm and 656.2725 nm are all within 0.050 mm, indicating that the imaging quality according to the embodiment of the present application is excellent.

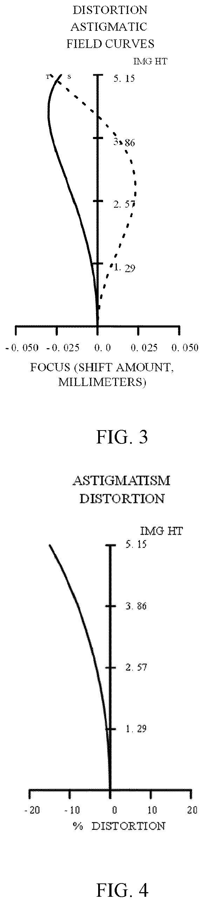

FIG. 3 is a field curve graph according to the embodiment of the present application, and it can be seen from FIG. 3 that the field curvature is within 0.050 mm, and better compensation is obtained. FIG. 4 is a distortion graph according to the embodiment of the present application, and it can be seen from FIG. 4 that the distortion is also well corrected.

Second Embodiment

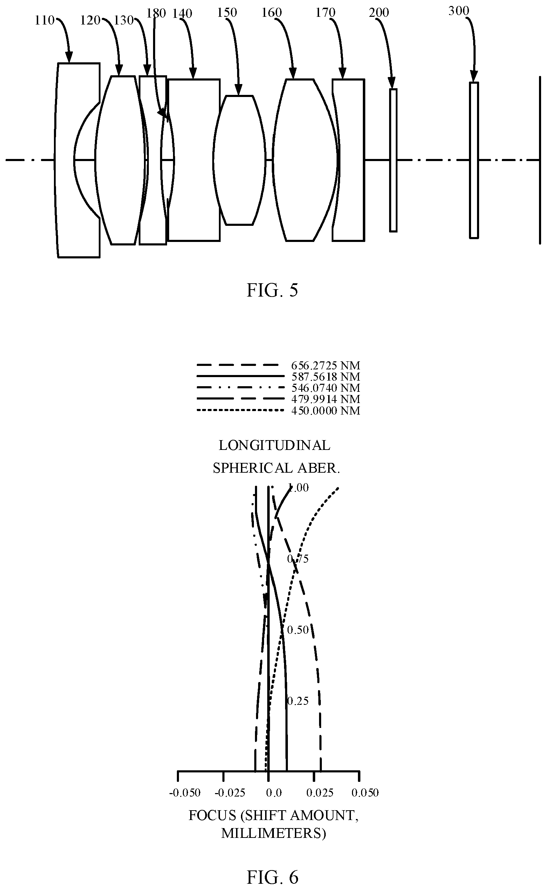

Referring to FIG. 5, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, an infrared filter 200, and a protective glass 300. The relevant parameters of the optical lens group are shown in Table 3. In Table 3, f is a focal length of the optical lens group, FNO indicates a f-number, and 1/2 FOV indicates half of the maximum angle of field of view. The unit of the focal length, the curvature radius and a thickness are all in millimeters.

Table 3

| f= 8.50; FNO= 2.08; 1/2 FOV=35.4 | | | | | | | | |
|---|---|---|---|---|---|---|---|---|
| Surface Number | Surface Name | Surface Shape | Curvature Radius | Thickness | Material | Refractive index | Abbe Number | Focal Length |
| Object side | -- | Spherical | Infinite | 3000 | -- | -- | -- | -- |
| 1 | First Lens | Spherical | 83.0770 | 1.20 | GLASS | 1.517 | 64.2 | -10.187 |
| 2 | | Spherical | 4.9435 | 1.27 | | | | |
| 3 | Second Lens | Spherical | 13.9750 | 3.07 | GLASS | 2.001 | 29.1 | 8.768 |
| 4 | | Spherical | -21.4600 | 0.20 | | | | |
| 5 | Third Lens | Spherical | -14.1060 | 0.80 | GLASS | 1.487 | 70.4 | -17.101 |
| 6 | | Spherical | 20.9350 | 0.40 | | | | |
| 7 | Stop | Spherical | Infinite | 0.40 | -- | -- | -- | -- |
| 8 | Fourth Lens | Spherical | -12.3930 | 2.40 | GLASS | 1.847 | 23.8 | -6.319 |
| 9 | Fifth Lens | Spherical | 10.4320 | 3.22 | GLASS | 1.804 | 46.5 | 6.931 |
| 10 | | Spherical | -10.4320 | 0.44 | | | | |
| 11 | Sixth Lens | Aspherical | 14.7560 | 3.98 | GLASS | 1.589 | 61.2 | 9.329 |
| 12 | | Aspherical | -7.9284 | 0.12 | | | | |
| 13 | Seventh Lens | Spherical | -20.3710 | 1.50 | GLASS | 1.689 | 31.2 | -29.346 |
| 14 | | Spherical | Infinite | 1.60 | | | | |
| 15 | Infrared Filter | Spherical | Infinite | 0.40 | GLASS | 1.517 | 64.2 | - |
| 16 | | Spherical | Infinite | 4.50 | | | | |
| 17 | Protective Glass | Spherical | Infinite | 0.50 | GLASS | 1.517 | 64.2 | - |
| 18 | | Spherical | Infinite | 3.81 | | | | |

As can be seen from Table 3 above, the focal length $f_1$ of the first lens 110 and the focal length f of the optical lens group in the embodiment of the present application satisfy a condition: $f_1/f$ =-1.20. The focal length $f_2$ of the second lens 120 and the focal length f of the optical lens group satisfy a condition: $f_2/f$ =1.03. The focal length $f_3$ of the third lens 130 and the focal length f of the optical lens group satisfy a condition: $f_3/f$ = -2.01. The focal length $f_4$ of the fourth lens 140 and the focal length f of the optical lens group satisfy a condition: $f_4/f$ = -0.74. The focal length $f_5$ of the fifth lens 150 and the focal length f of the optical lens group satisfy a condition: $f_5/f$ =0.82. The focal length $f_6$, of the sixth lens 160 and the focal length f of the optical lens group satisfy a condition: $f_6/f$ =1.10. The focal length $f_7$ of the seventh lens 170 and the focal length f of the optical lens group satisfy a condition: $f_7/f$ = -3.45. The combined focal length $f_{45}$ of the cemented lens and the focal length f of the optical lens group satisfy a condition: $f_{45}/f$ = 48.30/8.50= 5.68. The refractive index $nd_4$ of the fourth lens 140 satisfy a condition: $nd_4$ =1.847; the refractive index $nd_5$ of the fifth lens 150 satisfy a condition: $nd_5$ =1.804; and $|nd_4 - nd_5|$ = 0.04. The Abbe number $vd_4$ of the fourth lens 140 satisfy a condition: $vd_4$ =23.8. The Abbe number $vd_5$ of the fifth lens 150 satisfy a condition: $vd_5$ = 46.5 . The maximum imaging height ImgH of the optical lens group and the angle of field of view FOV of the optical lens group are satisfy a condition:
[Tan(FOV/2)]/(ImgH/2) = Tan(34.5°)/5.145 = 0.13 . In a range of 20°C to 40°C, a temperature coefficient |dn/dt| of the refractive index of the sixth lens 160 satisfy a condition: |dn/dt| = 4.70. In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ <93. The focal length f of the optical lens group and the entrance pupil diameter EPD of the optical lens group satisfy the following condition: f/EPD = 2.08 . The total track length TTL and the maximum imaging height ImgH of the optical lens group satisfy the following condition: ImgH/TTL = 10.29/29.80 = 0.35 . The focal length f of the optical lens group and the optical back focal length BFL of the optical system satisfy the following condition:

$$BFL/f = 10.81/8.50 = 1.27.$$

The surfaces of the lenses of the optical lens group may be aspherical. For these aspherical surfaces, the aspherical expression of the aspherical surface is as follows:

$$Z = \frac{cr^2}{1+\sqrt{1-(1+K)c^2r^2}} + A_4r^4 + A_6r^6 + A_8r^8 + A_{10}r^{10} + A_{12}r^{12} \ldots$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 4.

Table 4

| Surface Number | 11 | 12 |
|---|---|---|
| K | -1.68E+01 | -5.09E-01 |
| A4 | 4.42E-04 | 2.18E-04 |
| A6 | -1.47E-05 | -3.15E-06 |
| A8 | 0.00E+00 | 1.37E-08 |
| A10 | 0.00E+00 | -5.16E-09 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 6 is a graph showing the spherical aberration of the light at wavelengths of 450.0000 nm, 479.9914 nm, 546.0740 nm, 587.5618 nm and 656.2725 nm according to the embodiment of the present application. It can be seen from FIG. 6 that the spherical aberrations corresponding to the wavelengths of 450.0000 nm, 479.9914 nm, 546.0740 nm, 587.5618 nm and 656.2725 nm are all within 0.050 mm, indicating that the imaging quality according to the embodiment of the present application is excellent.

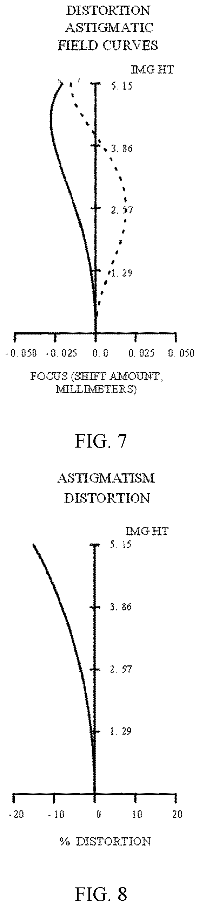

FIG. 7 is a field curve graph according to the embodiment of the present application, and it can be seen from FIG. 7 that the field curvature is within 0.050 mm, and better compensation is obtained. FIG. 8 is a distortion graph according to the embodiment of the present application, and it can be seen from FIG. 8 that the distortion is also well corrected.

Third Embodiment

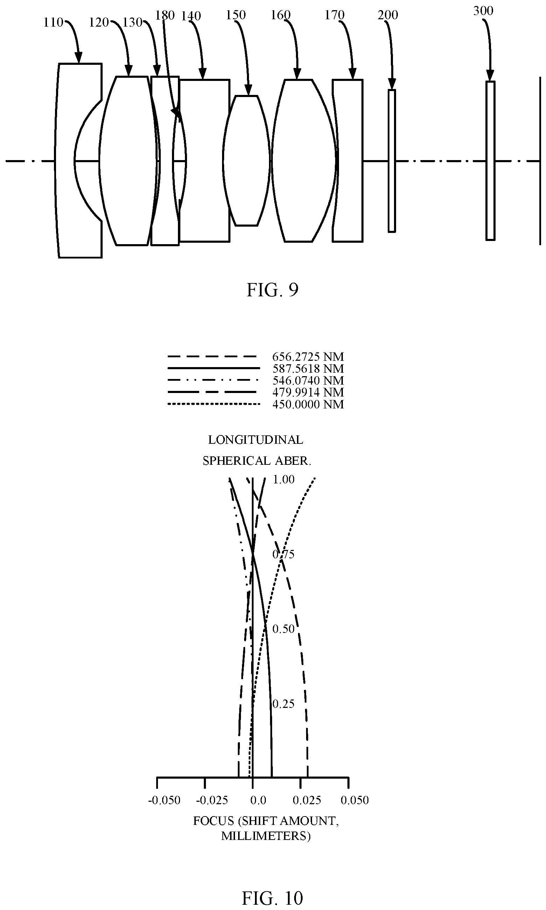

Referring to FIG. 9, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, an infrared filter 200, and a protective glass 300. The relevant parameters of the optical lens group are shown in Table 5. In Table 5, f is a focal length of the optical lens group, FNO indicates a f-number, and 1/2 FOV indicates half of the maximum angle of field of view. The unit of the focal length, the curvature radius and a thickness are all in millimeters.

Table 5

| f= 8.50; FNO= 2.08; 1/2 FOV=35.4 |
| Surface Number | Surface Name | Surface Shape | Curvature Radius | Thickness | Material | Refractive index | Abbe Number | Focal Length |
|---|---|---|---|---|---|---|---|---|
| Object side | -- | Spherical | Infinite | 5000 | -- | -- | -- | -- |
| 1 | First Lens | Spherical | 72.7030 | 1.20 | GLASS | 1.517 | 64.2 | -10.512 |
| 2 | | Spherical | 5.0438 | 1.51 | | | | |
| 3 | Second Lens | Spherical | 13.4680 | 3.53 | GLASS | 2.001 | 29.1 | 8.994 |
| 4 | | Spherical | -24.1720 | 0.19 | | | | |
| 5 | Third Lens | Spherical | -15.4360 | 0.80 | GLASS | 1.487 | 70.4 | -17.251 |
| 6 | | Spherical | 18.9300 | 0.40 | | | | |
| 7 | Stop | Spherical | Infinite | 0.40 | -- | -- | -- | -- |
| 8 | Fourth Lens | Spherical | -11.4510 | 2.27 | GLASS | 1.847 | 23.8 | -6.153 |
| 9 | Fifth Lens | Spherical | 10.6210 | 2.89 | GLASS | 1.804 | 46.5 | 6.994 |
| 10 | | Spherical | -10.6210 | 0.12 | | | | |
| 11 | Sixth Lens | Aspherical | 14.5940 | 3.94 | GLASS | 1.589 | 61.2 | 9.478 |
| 12 | | Aspherical | -8.1886 | 0.12 | | | | |
| 13 | Seventh Lens | Spherical | -26.2960 | 1.50 | GLASS | 1.689 | 31.2 | -37.882 |
| 14 | | Spherical | Infinite | 1.60 | | | | |
| 15 | Infrared Filter | Spherical | Infinite | 0.40 | GLASS | 1.523 | 54.5 | -- |
| 16 | | Spherical | Infinite | 5.60 | | | | |
| 17 | Protective Glass | Spherical | Infinite | 0.50 | GLASS | 1.523 | 54.5 | -- |
| 18 | | Spherical | Infinite | 2.80 | | | | |

As can be seen from Table 5 above, the focal length $f_1$ of the first lens 110 and the focal length f of the optical lens group in the embodiment of the present application satisfy a condition: $f_1/f$ =-1.24. The focal length $f_2$ of the second lens 120 and the focal length f of the optical lens group satisfy a condition: $f_2/f$ =1.06. The focal length $f_3$ of the third lens 130 and the focal length f of the optical lens group satisfy a condition: $f_3/f$ = -2.03. The focal length $f_4$ of the fourth lens 140 and the focal length f of the optical lens group satisfy a condition: $f_4/f$ = -0.72. The focal length $f_5$ of the fifth lens 150 and the focal length f of the optical lens group satisfy a condition: $f_5/f$ =0.82. The focal length $f_6$ of the sixth lens 160 and the focal length f of the optical lens group satisfy a condition: $f_6/f$ =1.12. The focal length $f_7$ of the seventh lens 170 and the focal length f of the optical lens group satisfy a condition:

$f_7/f$ = - 4.46. The combined focal length $f_{45}$ of the cemented lens and the focal length f of the optical lens group satisfy a condition: $f_{45}/f$ = 75.58/8.50= 8.89. The refractive index $nd_4$ of the fourth lens 140 satisfy a condition: $nd_4$ =1.847; the refractive index $nd_5$ of the fifth lens 150 satisfy a condition: $nd_5$ =1.804; and $|nd_4 - nd_5|$ =0.04. The Abbe number $vd_4$ of the fourth lens 140 satisfy a condition: $vd_4$ =23.8. The Abbe number $vd_5$ of the fifth lens 150 satisfy a condition: $vd_5$ =46.5 . The maximum imaging height ImgH of the optical lens group and the angle of field of view FOV of the optical lens group are satisfy a condition:

[Tan(FOV/2)]/(ImgH/2) = Tan(34.5°)/5.145 =0.13 . In a range of 20°C to 40°C, a temperature coefficient |dn/dt| of the refractive index of the sixth lens 160 satisfy a condition: |dn/dt| = 4.70. In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ <93. The focal length f of the optical lens group and the entrance pupil diameter EPD of the optical lens group satisfy the following condition: f/EPD = 2.08 . The total track length TTL and the maximum imaging height ImgH of the optical lens group satisfy the following condition:

ImgH/TTL = 10.29/29.77 =0.35 . The focal length f of the optical lens group and the optical back focal length BFL of the optical system satisfy the following condition:

$$BFL/f = 10.90/8.50 = 1.28.$$

The surfaces of the lenses of the optical lens group may be aspherical. For these aspherical surfaces, the aspherical expression of the aspherical surface is as follows:

$$Z = \frac{cr^2}{1+\sqrt{1-(1+K)c^2r^2}} + A_4 r^4 + A_6 r^6 + A_8 r^8 + A_{10} r^{10} + A_{12} r^{12} \ldots$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 6.

Table 6

| Surface Number | 11 | 12 |
|---|---|---|
| K | -9.88E-01 | -1.90E+00 |
| A4 | -9.55E-05 | -9.90E-05 |
| A6 | 0.00E+00 | 0.00E+00 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 10 is a graph showing the spherical aberration of the light at wavelengths of 450.0000 nm, 479.9914 nm, 546.0740 nm, 587.5618 nm and 656.2725 nm according to the embodiment of the present application. It can be seen from FIG. 10 that the spherical aberrations corresponding to the wavelengths of 450.0000 nm, 479.9914 nm, 546.0740 nm, 587.5618 nm and 656.2725 nm are all within 0.050 mm, indicating that the imaging quality according to the embodiment of the present application is excellent.

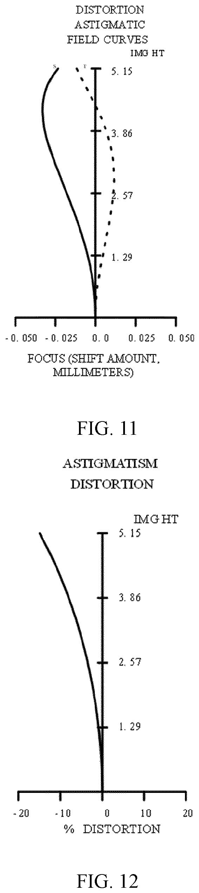

FIG. 11 is a field curve graph according to the embodiment of the present application, and it can be seen from FIG. 11 that the field curvature is within 0.050 mm, and better compensation is obtained. FIG. 12 is a distortion graph according to the embodiment of the present application, and it can be seen from FIG. 12 that the distortion is also well corrected.

Fourth Embodiment

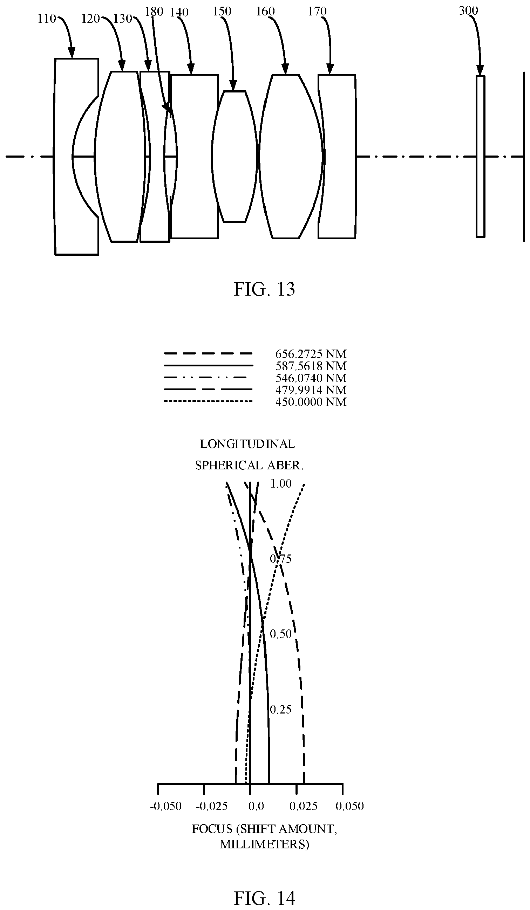

Referring to FIG. 13, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, and a protective glass 300. The relevant parameters of the optical lens group are shown in Table 7. In Table 7, f is a focal length of the optical lens group, FNO indicates a f-number, and 1/2 FOV indicates half of the maximum angle of field of view. The unit of the focal length, the curvature radius and a thickness are all in millimeters.

Table 7

| Surface Number | Surface Name | Surface Shape | Curvature Radius | Thickness | Material | Refractive index | Abbe Number | Focal Length |
|---|---|---|---|---|---|---|---|---|
| | f= 8.54; FNO= 2.08; 1/2 FOV=35.4 |

| Surface Number | Surface Name | Surface Shape | Curvature Radius | Thickness | Material | Refractive index | Abbe Number | Focal Length |
|---|---|---|---|---|---|---|---|---|
| Object side | -- | Spherical | Infinite | 5000 | -- | -- | -- | -- |
| 1 | First Lens | Spherical | 150.0000 | 1.20 | GLASS | 1.517 | 64.2 | -10.175 |
| 2 | | Spherical | 5.0844 | 1.39 | | | | |
| 3 | Second Lens | Spherical | 13.3950 | 3.19 | GLASS | 2.001 | 29.1 | 9.205 |
| 4 | | Spherical | -26.6740 | 0.30 | | | | |
| 5 | Third Lens | Spherical | -14.8640 | 0.90 | GLASS | 1.487 | 70.4 | -17.330 |
| 6 | | Spherical | 20.1190 | 0.40 | | | | |
| 7 | Stop | Spherical | Infinite | 0.40 | -- | -- | -- | -- |
| 8 | Fourth Lens | Spherical | -12.5120 | 2.21 | GLASS | 1.847 | 23.8 | -6.501 |
| 9 | Fifth Lens | Spherical | 10.8140 | 2.88 | GLASS | 1.804 | 46.5 | 7.112 |
| 10 | | Spherical | -10.8140 | 0.12 | | | | |
| 11 | Sixth Lens | Aspherical | 14.2900 | 3.99 | GLASS | 1.589 | 61.2 | 9.244 |
| 12 | | Aspherical | -7.9374 | 0.12 | | | | |
| 13 | Seventh Lens | Spherical | -21.6090 | 2.00 | GLASS | 1.689 | 31.2 | -35.062 |
| 14 | | Spherical | -200.0000 | 7.60 | | | | |
| 15 | Protective Glass | Spherical | Infinite | 0.50 | GLASS | 1.517 | 64.2 | - |
| 16 | | Spherical | Infinite | 2.51 | | | | |

As can be seen from Table 7 above, the focal length $f_1$ of the first lens 110 and the focal length f of the optical lens group in the embodiment of the present application satisfy a condition: $f_1/f$ =-1.19. The focal length $f_2$ of the second lens 120 and the focal length f of the optical lens group satisfy a condition: $f_2/f$ =1.08. The focal length $f_3$ of the third lens 130 and the focal length f of the optical lens group satisfy a condition: $f_3/f$ = -2.02. The focal length $f_4$ of the fourth lens 140 and the focal length f of the optical lens group satisfy a condition: $f_4/f$ = -0.76. The focal length $f_5$ of the fifth lens 150 and the focal length f of the optical lens group satisfy a condition: $f_5/f$ =0.83. The focal length $f_6$ of the sixth lens 160 and the focal length f of the optical lens group satisfy a condition: $f_6/f$ =1.08. The focal length $f_7$ of the seventh lens 170 and the focal length f of the optical lens group satisfy a condition: $f_7/f$ = - 4.11. The combined focal length $f_{45}$ of the cemented lens and the focal length f of the optical lens group satisfy a condition: $f_{45}/f$ = 60.66/8.54= 7.10. The refractive index $nd_4$ of the fourth lens 140 satisfy a condition: $nd_4$ =1.847; the refractive index $nd_5$ of the fifth lens 150 satisfy a condition: $nd_5$ =1.804; and $|nd_4 - nd_5|$ = 0.04. The Abbe number $vd_4$ of the fourth lens 140 satisfy a condition: $vd_4$ =23.8. The Abbe number $vd_5$ of the fifth lens 150 satisfy a condition: $vd_5$ =46.5 . The maximum imaging height ImgH of the optical lens group and the angle of field of view FOV of the optical lens group are satisfy a condition: [Tan(FOV/2)]/(ImgH/2) = Tan(34.5°)/5.145 = 0.13. In a range of 20°C to 40°C, a temperature coefficient |dn/dt| of the refractive index of the sixth lens 160 satisfy a condition: |dn/dt| =4.70 . In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ <93. The focal length f of the optical lens group and the entrance pupil diameter EPD of the optical lens group satisfy the following condition: f/EPD = 2.08 . The total track length TTL and the maximum imaging height ImgH of the optical lens group satisfy the following condition: ImgH/TTL = 10.29/29.70 = 0.35 . The focal length f of the optical lens group and the optical back focal length BFL of the optical system satisfy the following condition:

$$\mathrm{BFL}/\mathrm{f} \ = \ 10.61/8.54 \ = \ 1.24 \ .$$

The surfaces of the lenses of the optical lens group may be aspherical. For these aspherical surfaces, the aspherical expression of the aspherical surface is as follows:

$$Z = \frac{cr^2}{1+\sqrt{1-(1+K)c^2r^2}} + A_4r^4 + A_6r^6 + A_8r^8 + A_{10}r^{10} + A_{12}r^{12} \dots$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 8.

Table 8

| Surface Number | 11 | 12 |
|---|---|---|
| K | -9.75E-01 | -1.75E+00 |
| A4 | -8.64E-05 | -7.92E-05 |
| A6 | 0.00E+00 | 0.00E+00 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 14 is a graph showing the spherical aberration of the light at wavelengths of 450.0000 nm, 479.9914 nm, 546.0740 nm, 587.5618 nm and 656.2725 nm according to the embodiment of the present application. It can be seen from FIG. 14 that the spherical aberrations corresponding to the wavelengths of 450.0000 nm, 479.9914 nm, 546.0740 nm, 587.5618 nm and 656.2725 nm are all within 0.050 mm, indicating that the imaging quality according to the embodiment of the present application is excellent.

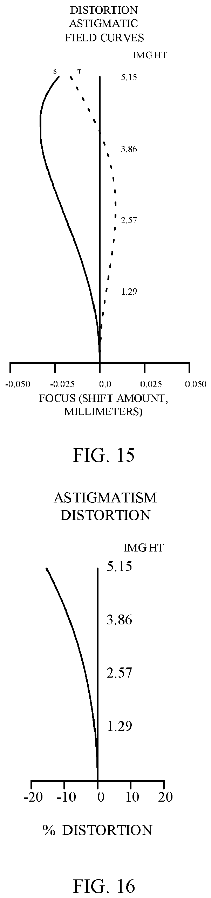

FIG. 15 is a field curve graph according to the embodiment of the present application, and it can be seen from FIG. 15 that the field curvature is within 0.050 mm, and better compensation is obtained. FIG. 16 is a distortion graph according to the embodiment of the present application, and it can be seen from FIG. 16 that the distortion is also well corrected.

Fifth Embodiment

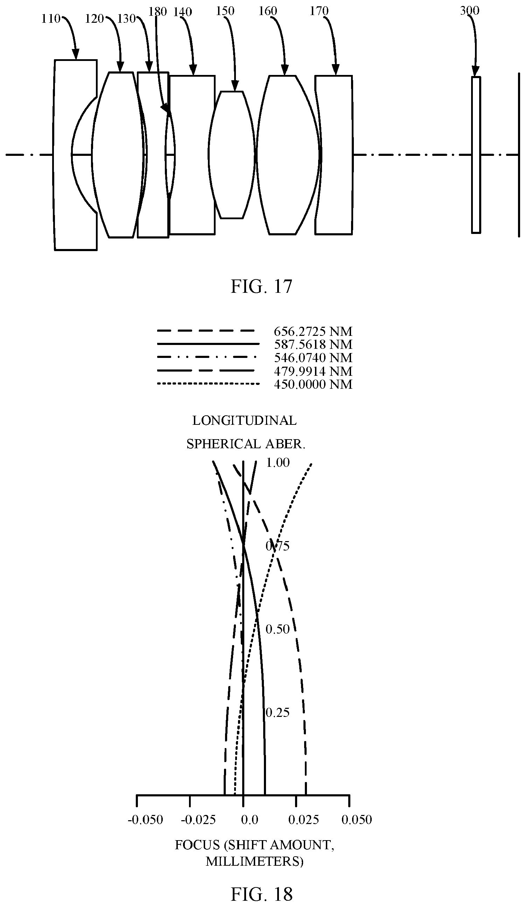

Referring to FIG. 17, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, and a protective glass 300. The relevant parameters of the optical lens group are shown in Table 9. In Table 9, f is a focal length of the optical lens group, FNO indicates an f-number, and 1/2 FOV indicates half of the maximum angle of field of view. The unit of the focal length, the curvature radius and a thickness are all in millimeters.

Table 9

| Surface Number | Surface Name | Surface Shape | Curvature Radius | Thickness | Material | Refractive index | Abbe Number | Focal Length |
|---|---|---|---|---|---|---|---|---|
| \multicolumn — f= 8.54; FNO= 2.08; 1/2 FOV=35.4 ||||||||| 
| Object side | -- | Spherical | Infinite | 5000 | -- | -- | -- | -- |
| 1 | First Lens | Spherical | 150.0000 | 1.20 | GLASS | 1.517 | 64.2 | -10.071 |
| 2 | | Spherical | 5.0345 | 1.29 | | | | |
| 3 | Second Lens | Spherical | 13.1270 | 3.28 | GLASS | 2.001 | 29.1 | 8.323 |
| 4 | | Spherical | -20.3920 | 0.20 | | | | |
| 5 | Third Lens | Spherical | -13.7210 | 1.20 | GLASS | 1.589 | 61.3 | -14.230 |
| 6 | | Spherical | 22.4740 | 0.25 | | | | |
| 7 | Stop | Spherical | Infinite | 0.35 | -- | -- | -- | -- |
| 8 | Fourth Lens | Spherical | -11.8050 | 2.14 | GLASS | 1.847 | 23.8 | -6.202 |
| 9 | Fifth Lens | Spherical | 10.4320 | 2.95 | GLASS | 1.804 | 46.5 | 6.888 |
| 10 | | Spherical | -10.4320 | 0.12 | | | | |
| 11 | Sixth Lens | Aspherical | 14.3750 | 4.00 | GLASS | 1.589 | 61.2 | 9.224 |
| 12 | | Aspherical | -7.8821 | 0.12 | | | | |
| 13 | Seventh Lens | Spherical | -21.6400 | 2.00 | GLASS | 1.689 | 31.2 | -35.118 |
| 14 | | Spherical | -200.0 | 7.60 | | | | |
| 15 | Protective Glass | Spherical | Infinite | 0.50 | GLASS | 1.517 | 64.2 | - |
| 16 | | Spherical | Infinite | 2.50 | | | | |

As can be seen from Table 9 above, the focal length $f_1$ of the first lens 110 and the focal length f of the optical lens group in the embodiment of the present application satisfy a condition: $f_1/f$ =-1.18. The focal length $f_2$ of the second lens 120 and the focal length f of the optical lens group satisfy a condition: $f_2/f$ =0.97. The focal length $f_3$ of the third lens 130 and the focal length f of the optical lens group satisfy a condition: $f_3/f$ = -1.67. The focal length $f_4$ of the fourth lens 140 and the focal length f of the optical lens group satisfy a condition: $f_4/f$ = -0.73. The focal length $f_5$ of the fifth lens 150 and the focal length f of the optical lens group satisfy a condition: $f_5/f$ =0.81. The focal length $f_6$ of the sixth lens 160 and the focal length f of the optical lens group satisfy a condition: $f_6/f$ = 1.08. The focal length $f_7$ of the seventh lens 170 and the focal length f of the optical lens group satisfy a condition:

$f_7/f$ = -4.11. The combined focal length $f_{45}$ of the cemented lens and the focal length f of the optical lens group satisfy a condition: $f_{45}/f$ = 60.82/8.54 = 7.12. The refractive index $nd_4$ of the fourth lens 140 satisfy a condition: $nd_4$ =1.847; the refractive index $nd_5$ of the fifth lens 150 satisfy a condition: $nd_5$ =1.804; and $|nd_4 - nd_5|$ = 0.04. The Abbe number $vd_4$ of the fourth lens 140 satisfy a condition: $vd_4$ =23.8. The Abbe number $vd_5$ of the fifth lens 150 satisfy a condition: $vd_5$ =46.5 . The maximum imaging height ImgH of the optical lens group and the angle of field of view FOV of the optical lens group are satisfy a condition:

[Tan(FOV/2)]/(ImgH/2) = Tan(34.5°)/5.145 = 0.13. In a range of 20°C to 40°C, a temperature coefficient |dn/dt| of the refractive index of the sixth lens 160 satisfy a condition: |dn/dt| = 4.70 . In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ <93. The focal length f of the optical lens group and the entrance pupil diameter EPD of the optical lens group satisfy the following condition: f/EPD = 2.08 . The total track length TTL and the maximum imaging height ImgH of the optical lens group satisfy the following condition:

ImgH/TTL = 10.29/29.70 = 0.35 . The focal length f of the optical lens group and the optical back focal length BFL of the optical system satisfy the following condition:

$$BFL/f = 10.61/8.54 = 1.24 .$$

The surfaces of the lenses of the optical lens group may be aspherical. For these aspherical surfaces, the aspherical expression of the aspherical surface is as follows:

$$Z=\frac{cr^2}{1+\sqrt{1-(1+K)c^2r^2}}+A_4r^4+A_6r^6+A_8r^8+A_{10}r^{10}+A_{12}r^{12}\ ...$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 10.

Table 10

| Surface Number | 11 | 12 |
|---|---|---|
| K | -1.00E+00 | -1.74E+00 |
| A4 | -9.23E-05 | -9.41E-05 |
| A6 | 0.00E+00 | 0.00E+00 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 18 is a graph showing the spherical aberration of the light at wavelengths of 450.0000 nm, 479.9914 nm, 546.0740 nm, 587.5618 nm and 656.2725 nm according to the embodiment of the present application. It can be seen from FIG. 18 that the spherical aberrations corresponding to the wavelengths of 450.0000 nm, 479.9914 nm, 546.0740 nm, 587.5618 nm and 656.2725 nm are all within 0.050 mm, indicating that the imaging quality according to the embodiment of the present application is excellent.

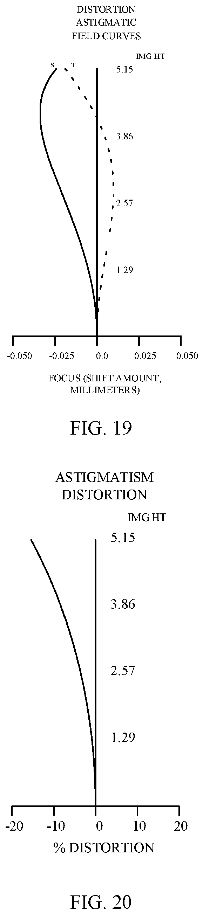

FIG. 19 is a field curve graph according to the embodiment of the present application, and it can be seen from FIG. 19 that the field curvature is within 0.050 mm, and better compensation is obtained. FIG. 20 is a distortion graph according to the embodiment of the present application, and it can be seen from FIG. 20 that the distortion is also well corrected.

Sixth Embodiment

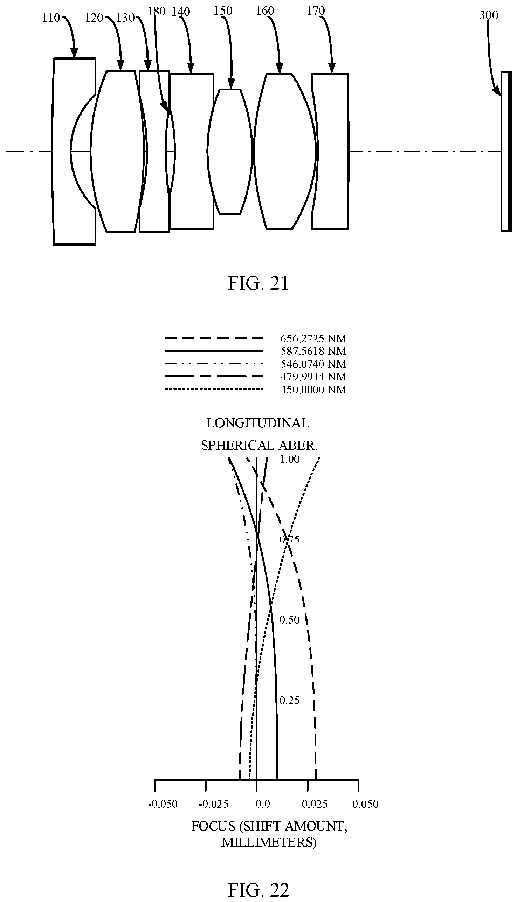

Referring to FIG. 21, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, and a protective glass 300. The relevant parameters of the optical lens group are shown in Table 11. In Table 11, f is a focal length of the optical lens group, FNO indicates a f-number, and 1/2 FOV indicates half of the maximum angle of field of view. The unit of the focal length, the curvature radius and a thickness are all in millimeters.

Table 11

| f= 8.54; FNO= 2.08; 1/2 FOV=35.4 | | | | | | | | |
|---|---|---|---|---|---|---|---|---|
| Surface Number | Surface Name | Surface Shape | Curvature Radius | Thickness | Material | Refractive index | Abbe Number | Focal Length |
| Object side | -- | Spherical | Infinite | 5000 | -- | -- | -- | -- |
| 1 | First Lens | Spherical | 150.0000 | 1.20 | GLASS | 1.517 | 64.2 | -10.159 |
| 2 | | Spherical | 5.0771 | 1.27 | | | | |
| 3 | Second Lens | Spherical | 13.3330 | 3.47 | GLASS | 2.001 | 29.1 | 8.735 |
| 4 | | Spherical | -22.6120 | 0.20 | | | | |
| 5 | Third Lens | Spherical | -13.8340 | 1.20 | GLASS | 1.517 | 64.2 | -15.431 |
| 6 | | Spherical | 19.5570 | 0.20 | | | | |
| 7 | Stop | Spherical | Infinite | 0.40 | -- | -- | -- | -- |
| 8 | Fourth Lens | Spherical | -12.1010 | 2.11 | GLASS | 1.847 | 23.8 | -6.318 |
| 9 | Fifth Lens | Spherical | 10.5450 | 2.89 | GLASS | 1.804 | 46.5 | 6.948 |
| 10 | | Spherical | -10.5450 | 0.12 | | | | |
| 11 | Sixth Lens | Aspherical | 14.3214 | 4.00 | GLASS | 1.589 | 61.2 | 9.228 |
| 12 | | Aspherical | -7.9030 | 0.12 | | | | |
| 13 | Seventh Lens | Spherical | -22.1710 | 2.00 | GLASS | 1.689 | 31.2 | -36.088 |
| 14 | | Spherical | -200.0 | 9.90 | | | | |
| 15 | Protective Glass | Spherical | Infinite | 0.50 | GLASS | 1.517 | 64.2 | - |
| 16 | | Spherical | Infinite | 0.12 | | | | |

As can be seen from Table 11 above, the focal length $f_1$ of the first lens 110 and the focal length f of the optical lens group in the embodiment of the present application satisfy a condition: $f_1/f$ =-1.19. The focal length $f_2$ of the second lens 120 and the focal length f of the optical lens group satisfy a condition: $f_2/f$ =1.02. The focal length $f_3$ of the third lens 130 and the focal length f of the optical lens group satisfy a condition: $f_3/f$ = -1.81. The focal length $f_4$ of the fourth lens 140 and the focal length f of the optical lens group satisfy a condition: $f_4/f$ = -0.74. The focal length $f_5$ of the fifth lens 150 and the focal length f of the optical lens group satisfy a condition: $f_5/f$ =0.81. The focal length $f_6$ of the sixth lens 160 and the focal length f of the optical lens group satisfy a condition: $f_6/f$ =1.08. The focal length $f_7$ of the seventh lens 170 and the focal length f of the optical lens group satisfy a condition:
$f_7/f$ = -4.23. The combined focal length $f_{45}$ of the cemented lens and the focal length f of the optical lens group satisfy a condition: $f_{45}/f$ = 60.21/8.54 = 7.05. The refractive index $nd_4$ of the fourth lens 140 satisfy a condition: $nd_4$ =1.847; the refractive index $nd_5$ of the fifth lens 150 satisfy a condition: $nd_5$ =1.804; and $|nd_4 - nd_5|$ = 0.04. The Abbe number $vd_4$ of the fourth lens 140 satisfy a condition: $vd_4$ =23.8. The Abbe number $vd_5$ of the fifth lens 150 satisfy a condition: $vd_5$ =46.5 . The maximum imaging height ImgH of the optical lens group and the angle of field of view FOV of the optical lens group are satisfy a condition:
[Tan(FOV/2)]/(ImgH/2) = Tan(34.5°)/5.145 = 0.13. In a range of 20°C to 40°C, a temperature coefficient |dn/dt| of the refractive index of the sixth lens 160 satisfy a condition: |dn/dt| = 4.70 . In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ <93. The focal length f of the optical lens group and the entrance pupil diameter EPD of the optical lens group satisfy the following condition: f/EPD = 2.08. The total track length TTL and the maximum imaging height ImgH of the optical lens group satisfy the following condition: ImgH/TTL = 10.29/29.80 = 0.35 . The focal length f of the optical lens group and the optical back focal length BFL of the optical system satisfy the following condition:

$$BFL/f = 10.52/8.54 = 1.23 .$$

The surfaces of the lenses of the optical lens group may be aspherical. For these aspherical surfaces, the aspherical expression of the aspherical surface is as follows:

$$Z = \frac{cr^2}{1 + \sqrt{1 - (1+K)c^2 r^2}} + A_4 r^4 + A_6 r^6 + A_8 r^8 + A_{10} r^{10} + A_{12} r^{12} \dots$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 12.

Table 12

| Surface Number | 11 | 12 |
|---|---|---|
| K | -9.99E-01 | -1.76E+00 |
| A4 | -9.30E-05 | -1.01E-04 |
| A6 | 0.00E+00 | 0.00E+00 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 22 is a graph showing the spherical aberration of the light at wavelengths of 450.0000 nm, 479.9914 nm, 546.0740 nm, 587.5618 nm and 656.2725 nm according to the embodiment of the present application. It can be seen from FIG. 22 that the spherical aberrations corresponding to the wavelengths of 450.0000 nm, 479.9914 nm, 546.0740 nm, 587.5618 nm and 656.2725 nm are all within 0.050 mm, indicating that the imaging quality according to the embodiment of the present application is excellent.

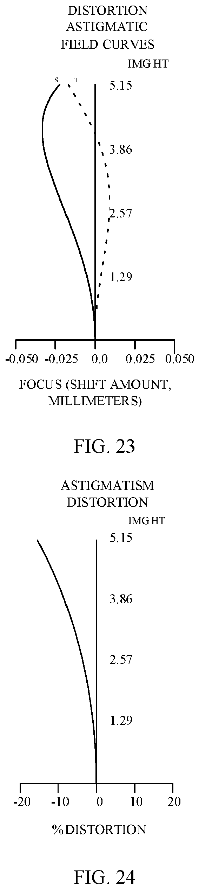

FIG. 23 is a field curve graph according to the embodiment of the present application, and it can be seen from FIG. 23 that the field curvature is within 0.050 mm, and better compensation is obtained. FIG. 24 is a distortion graph according to the embodiment of the present application, and it can be seen from FIG. 24 that the distortion is also well corrected.

Seventh Embodiment

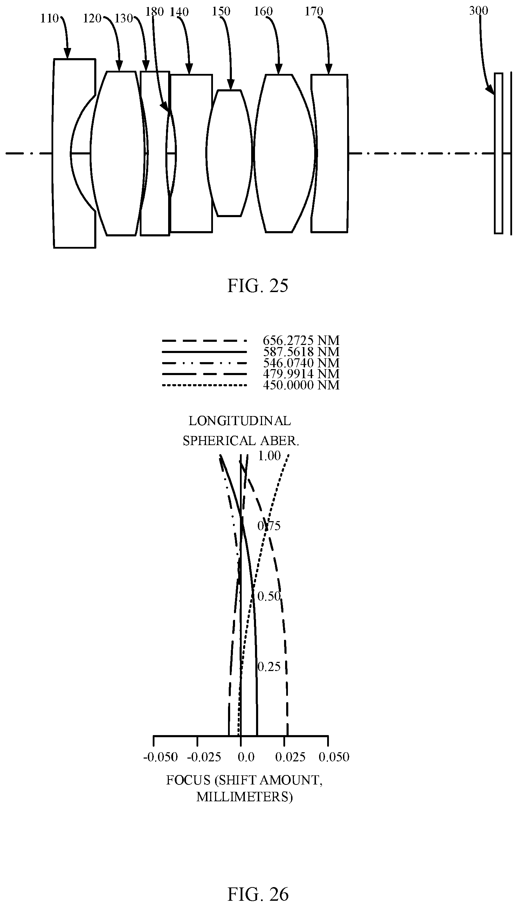

Referring to FIG. 25, which is a schematic view of an optical lens group for imaging according to an embodiment of the present application. The optical lens group includes, successively in order from an object side to an image side along an optical axis: a first lens 110, a second lens 120, a third lens 130, a stop 180, a fourth lens 140, a fifth lens 150, a sixth lens 160, a seventh lens 170, and a protective glass 300. The relevant parameters of the optical lens group are shown in Table 13. In Table 13, f is a focal length of the optical lens group, FNO indicates a f-number, and 1/2 FOV indicates half of the maximum angle of field of view. The unit of the focal length, the curvature radius and a thickness are all in millimeters.

Table 13

| | | | f= 8.49; FNO= 2.05; 1/2 FOV=35.4 | | | | | |
|---|---|---|---|---|---|---|---|---|
| Surface Number | Surface Name | Surface Shape | Curvature Radius | Thickness | Material | Refractive index | Abbe Number | Focal Length |
| Object side | -- | Spherical | Infinite | 5000 | -- | -- | -- | -- |
| 1 | First Lens | Spherical | 150.0000 | 1.20 | GLASS | 1.517 | 64.2 | -10.219 |
| 2 | | Spherical | 5.1060 | 1.28 | | | | |
| 3 | Second Lens | Spherical | 13.3420 | 3.51 | GLASS | 2.001 | 29.1 | 8.814 |
| 4 | | Spherical | -23.1570 | 0.20 | | | | |
| 5 | Third Lens | Spherical | -14.5010 | 1.20 | GLASS | 1.517 | 64.2 | -16.037 |
| 6 | | Spherical | 20.0650 | 0.20 | | | | |
| 7 | Stop | Spherical | Infinite | 0.40 | -- | -- | -- | -- |
| 8 | Fourth Lens | Spherical | -11.9860 | 1.98 | GLASS | 1.847 | 23.8 | -6.460 |
| 9 | Fifth Lens | Spherical | 11.0236 | 2.98 | GLASS | 1.804 | 46.5 | 7.257 |
| 10 | | Spherical | -11.0236 | 0.12 | | | | |
| 11 | Sixth Lens | Aspherical | 15.1280 | 3.95 | GLASS | 1.621 | 63.8 | 9.068 |
| 12 | | Aspherical | -8.0596 | 0.12 | | | | |
| 13 | Seventh Lens | Spherical | -23.0460 | 2.00 | GLASS | 1.689 | 31.2 | -37.699 |
| 14 | | Spherical | -200.0 | 9.50 | | | | |
| 15 | Protective Glass | Spherical | Infinite | 0.50 | GLASS | 1.523 | 54.5 | - |
| 16 | | Spherical | Infinite | 0.57 | | | | |

As can be seen from Table 11 above, the focal length $f_1$ of the first lens 110 and the focal length f of the optical lens group in the embodiment of the present application satisfy a condition: $f_1/f$ =-1.20. The focal length $f_2$ of the second lens 120 and the focal length f of the optical lens group satisfy a condition: $f_2/f$ =1.03. The focal length $f_3$ of the third lens 130 and the focal length f of the optical lens group satisfy a condition: $f_3/f$ = -1.88. The focal length $f_4$ of the fourth lens 140 and the focal length f of the optical lens group satisfy a condition: $f_4/f$ = -0.76. The focal length $f_5$ of the fifth lens 150 and the focal length f of the optical lens group satisfy a condition: $f_5/f$ =0.85. The focal length $f_6$ of the sixth lens 160 and the focal length f of the optical lens group satisfy a condition: $f_6/f$ =1.06. The focal length $f_7$ of the seventh lens 170 and the focal length f of the optical lens group satisfy a condition:
$f_7/f$ = -4.41. The combined focal length $f_{45}$ of the cemented lens and the focal length f of the optical lens group satisfy a condition: $f_{45}/f$ = 82.23/8.54 = 9.63. The refractive index $nd_4$ of the fourth lens 140 satisfy a condition: $nd_4$ =1.847; the refractive index $nd_5$ of the fifth lens 150 satisfy a condition: $nd_5$ =1.804; and $|nd_4 - nd_5|$ = 0.04. The Abbe number $vd_4$ of the fourth lens 140 satisfy a condition: $vd_4$ =23.8. The Abbe number $vd_5$ of the fifth lens 150 satisfy a condition: $vd_5$ =46.5 . The maximum imaging height ImgH of the optical lens group and the angle of field of view FOV of the optical lens group are satisfy a condition:
[Tan (FOV/2)]/(ImgH/2) = Tan(34.5°)/5.145 = 0.13. In a range of 20°C to 40°C, a temperature coefficient |dn/dt| of the refractive index of the sixth lens 160 satisfy a condition: |dn/dt| = 4.20 . In a range of -30°C to 70°C, the average linear expansion coefficient $\alpha_i$ of multiple lenses with refractive powers in the optical lens group satisfy the following conditions: Min $\alpha_i$ >59 ; Max $\alpha_i$ < 105 . The focal length f of the optical lens group and the entrance pupil diameter EPD of the optical lens group satisfy the following condition: f/EPD = 2.08 . The total track length TTL and the maximum imaging height ImgH of the optical lens group satisfy the following condition:
ImgH/TTL = 10.29/29.70 = 0.35 . The focal length f of the optical lens group and the optical back focal length BFL of the optical system satisfy the following condition:

$$BFL/f = 10.57/8.54 = 1.24 .$$

The surfaces of the lenses of the optical lens group may be aspherical. For these aspherical surfaces, the aspherical expression of the aspherical surface is as follows:

$$Z = \frac{cr^2}{1+\sqrt{1-(1+K)c^2 r^2}} + A_4 r^4 + A_6 r^6 + A_8 r^8 + A_{10} r^{10} + A_{12} r^{12} \ldots$$

where, Z represents the height parallel to the Z axis of the surfaces of the lenses; r represents the radial distance from the vertex; c represents the curvature of the surface at the vertex; K represents the conic constant; $A_4$, $A_6$, $A_8$, $A_{10}$, $A_{12}$ represent 4th order, 6th order, 8th order, 10th order, and 12th order aspheric coefficients, respectively. In the embodiment of the present application, the surface of the sixth lens 160 facing the object side is aspherical, the surface of the sixth lens 160 facing the image side is aspherical. The conic constants K and the aspheric coefficients corresponding to the two aspherical surfaces are shown in Table 14.

Table 14

| Surface Number | 11 | 12 |
|---|---|---|
| K | -1.04E+00 | -1.80E+00 |
| A4 | -9.62E-05 | -1.03E-04 |
| A6 | 0.00E+00 | 0.00E+00 |
| A8 | 0.00E+00 | 0.00E+00 |
| A10 | 0.00E+00 | 0.00E+00 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

FIG. 26 is a graph showing the spherical aberration of the light at wavelengths of 450.0000 nm, 479.9914 nm, 546.0740 nm, 587.5618 nm and 656.2725 nm according to the embodiment of the present application. It can be seen from FIG. 26 that the spherical aberrations corresponding to the wavelengths of 450.0000 nm, 479.9914 nm, 546.0740 nm, 587.5618 nm and 656.2725 nm are all within 0.050 mm, indicating that the imaging quality according to the embodiment of the present application is excellent.

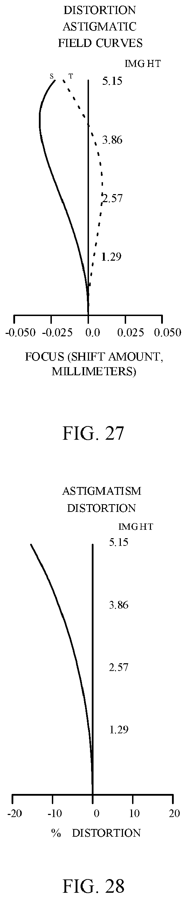

FIG. 27 is a field curve graph according to the embodiment of the present application, and it can be seen from FIG. 27 that the field curvature is within 0.050 mm, and better compensation is obtained. FIG. 28 is a distortion graph according to the embodiment of the present application, and it can be seen from FIG. 28 that the distortion is also well corrected.

In a second aspect, an embodiment of the present application provides a camera module including any of the aforementioned optical lens groups and an image sensor. The optical lens group is used to receive a light signal of a subject and project the light signal to the image sensor. The image sensor is used to convert the light signal corresponding to the subject into an image signal.

In a third aspect, an embodiment of the present application provides a terminal, including the aforementioned camera module. The terminal can be any device with the function of acquiring images. For example, the terminal may be a smart phone, wearable device, computer device, television, vehicle, camera, monitoring device, etc. The camera module cooperates with the terminal to realize image acquisition and reproduction of the target object.

In the description of the present application, it should be understood that the terms "first", "second" and the like are used for descriptive purposes only, and are not intended be construed as indicating or implying relative importance. For those of ordinary skill in the art, the specific meanings of the above terms in the present application can be understood in specific situations. In addition, in the description of the present application, unless otherwise specified, "a plurality" means two or more. "And/or", which describes the association relationship of the associated objects, means that there can be three kinds of relationships, for example, A and/or B, which can mean that A exists alone, A and B exist at the same time, or B exists alone. The character "/" generally indicates that the associated objects before or after the character are in an "or" relationship.

The above disclosures are only the preferred embodiments of the present application, and certainly, cannot used to limit the scope of the present application. Therefore, equivalent changes made according to the claims of the present application are still within the scope of the present application.

## Claims

1. An optical lens group, comprising, successively in order from an object side to an image side along an optical axis: a first lens, a second lens, a third lens, a fourth lens, a fifth lens, a sixth lens, and a seventh lens; wherein,

    the first lens, the third lens and the seventh lens have negative refractive powers; and
    the second lens and the sixth lens have positive refractive powers.

2. The optical lens group according to claim 1, wherein an image side surface of the fourth lens and an object side surface of the fifth lens are cemented, such that the fourth lens and the fifth lens form a cemented lens.

3. The optical lens group according to claim 2, wherein a curvature radius of the image side surface of the fourth lens at the optical axis is positive, and a curvature radius of the object side surface of the fifth lens at the optical axis is positive.

4. The optical lens group according to claim 2, wherein a combined focal length of the cemented lens is $f_{45}$, a focal length of the optical lens group is f; $f_{45}$ and f satisfy the following condition:

$$0 < f_{45}/f < 20.$$

5. The optical lens group according to claim 1, wherein an refractive index of the fourth lens is $nd_4$, an Abbe number of the fourth lens is $vd_4$ ; $nd_4$, and $vd_4$ satisfy the following conditions:

$$nd_4 > 1.65;$$

$$vd_4 < 64.$$

6. The optical lens group according to claim 1, wherein an refractive index of the fifth lens is $nd_5$, an Abbe number of the fifth lens is $vd_5$; $nd_5$ and $vd_5$ satisfy the following conditions:

$$nd_5 > 1.65;$$

$$vd_5 < 64.$$

7. The optical lens group according to claim 1, wherein an refractive index of the fourth lens is $nd_4$, an refractive index of the fifth lens is $nd_5$ ; $nd_4$ , and $nd_5$ satisfy the following conditions:

$$\left| nd_4 - nd_5 \right| < 0.1.$$

8. The optical lens group according to claim 1, wherein the fourth lens has a negative refractive power, an focal length of the fourth lens is $f_4$ , a focal length of the optical lens group is f ; $f_4$ and f satisfy the following condition:

$$f_4/f > -3.$$

9. The optical lens group according to claim 1, wherein the fifth lens has a positive refractive power, an focal length of the fifth lens is $f_5$ , a focal length of the optical lens group is f ; $f_5$ and f satisfy the following condition:

$$f_5/f < 2.0$$

10. The optical lens group according to claim 1, wherein a focal length of the first lens is $f_1$ , a focal length of the optical lens group is f ; $f_1$ and f satisfy the following condition:

$$-3 < f_1/f < -1$$

11. The optical lens group according to claim 1, wherein a focal length of the second lens is $f_2$ , a focal length of the optical lens group is f ; $f_2$ and f satisfy the following condition:

$$f_2/f < 5$$

12. The optical lens group according to claim 1, wherein a focal length of the third lens is $f_3$, a focal length of the optical lens group is f ; $f_3$ and f satisfy the following condition:

$$f_3/f > -5$$

13. The optical lens group according to claim 1, wherein a focal length of the sixth lens is $f_6$ , a focal length of the optical lens group is f ; $f_6$ and f satisfy the following condition:

$$0 < f_6/f < 5$$

14. The optical lens group according to claim 1, wherein a focal length of the seventh lens is $f_7$ , a focal length of the optical lens group is f ; $f_7$ and f satisfy the following condition:

$$f_7/f > -8$$

15. The optical lens group according to claim 1, wherein a diagonal length of an effective pixel area on the image plane is ImgH, an angle of field of view in a diagonal direction of the optical lens group is FOV; ImgH and FOV satisfy the following condition:

$$0.1 < \left[ Tan\left(FOV/2\right)\right]/\left(ImgH/2\right) < 0.5$$

16. The optical lens group according to claim 1, wherein in a range of 20°C to 40°C, a temperature coefficient of a refractive index of the sixth lens is |dn/dt|; |dn/dt| satisfies the following condition:

$$\left|dn/dt\right| \leq 8.5$$

17. The optical lens group according to claim 1, wherein in a range of -30°C to 70°C, an average linear expansion coefficient of the lens with a refractive power in the optical lens group is $\alpha_i$, wherein i is a serial number of the lens in the optical lens group counted from a side of the object side; $\alpha_i$ satisfies the following conditions:

$$Min\ \alpha_i > 50;$$

$$Max\ \alpha_i < 150$$

18. The optical lens group according to claim 1, wherein a focal length of the optical lens group is f , an optical back focal length of the optical lens group is BFL ; f and BFL satisfy the following condition:

$$0 < \mathrm{BFL}/\mathrm{f} \ < 3 \ .$$

19. The optical lens group according to claim 1, wherein a diagonal length of an effective pixel area on the image plane is ImgH, a total track length of the optical lens group is TTL ; ImgH and TTL satisfy the following condition:

$$\mathrm{ImgH}/\mathrm{TTL} \ > 0.1 \ .$$

20. The optical lens group according to claim 1, wherein a focal length of the optical lens group is f , an entrance pupil diameter of the optical lens group is EPD ; f and EPD satisfy the following condition:

$$\mathrm{f}/\mathrm{EPD} \ \le \ 2.4 \ .$$

21. A camera module, comprising:

   the optical lens group according to any one of claims 1 to 20; and
   an image sensor;
   wherein the optical lens group is configured to receive a light signal of a subject and project the light signal to the image sensor; and
   the image sensor is configured to convert the light signal corresponding to the subject into an image signal.

22. A terminal, comprising the camera module according to claim 21.

FIG. 1

FIG. 2

DISTORTION
ASTIGMATIC
FIELD CURVES

FIG. 3

ASTIGMATISM
DISTORTION

FIG. 4

110 120 130 180 140 150 160 170 200 300

FIG. 5

— — — — 656.2725 NM
————— 587.5618 NM
— · · — · · — 546.0740 NM
— — — 479.9914 NM
········· 450.0000 NM

LONGITUDINAL
SPHERICAL ABER.

1.00

0.75

0.50

0.25

-0.050    -0.025    0.0    0.025    0.050

FOCUS (SHIFT AMOUNT,
MILLIMETERS)

FIG. 6

DISTORTION
ASTIGMATIC
FIELD CURVES

IMG HT

FOCUS (SHIFT AMOUNT,
MILLIMETERS)

FIG. 7

ASTIGMATISM
DISTORTION

IMG HT

% DISTORTION

FIG. 8

FIG. 9

FIG. 10

DISTORTION
ASTIGMATIC
FIELD CURVES

IMG HT

5. 15

3. 86

2. 57

1. 29

- 0. 050   - 0. 025   0. 0   0. 025   0. 050

FOCUS (SHIFT AMOUNT,
MILLIMETERS)

FIG. 11

ASTIGMATISM
DISTORTION

IMG HT

5. 15

3. 86

2. 57

1. 29

- 20   - 10   0   10   20

% DISTORTION

FIG. 12

FIG. 13

| | |
|---|---|
| – – – – | 656.2725 NM |
| ——— | 587.5618 NM |
| — · · — · · — | 546.0740 NM |
| — — — | 479.9914 NM |
| ············· | 450.0000 NM |

LONGITUDINAL
SPHERICAL ABER.

FOCUS (SHIFT AMOUNT,
MILLIMETERS)

FIG. 14

DISTORTION
ASTIGMATIC
FIELD CURVES

IMG HT

S    T         5.15

3.86

2.57

1.29

-0.050    -0.025    0.0    0.025    0.050

FOCUS (SHIFT AMOUNT,
MILLIMETERS)

FIG. 15

ASTIGMATISM
DISTORTION

IMG HT
5.15

3.86

2.57

1.29

-20  -10   0   10   20

% DISTORTION

FIG. 16

FIG. 17

LONGITUDINAL
SPHERICAL ABER.

FOCUS (SHIFT AMOUNT,
MILLIMETERS)

FIG. 18

DISTORTION
ASTIGMATIC
FIELD CURVES

IMG HT

S    T    5.15

3.86

2.57

1.29

-0.050    -0.025    0.0    0.025    0.050

FOCUS (SHIFT AMOUNT,
MILLIMETERS)

FIG. 19

ASTIGMATISM
DISTORTION

IMG HT

5.15

3.86

2.57

1.29

-20    -10    0    10    20

% DISTORTION

FIG. 20

FIG. 21

FIG. 22

DISTORTION
ASTIGMATIC
FIELD CURVES

IMG HT

S    T      5.15

3.86

2.57

1.29

-0.050  -0.025   0.0    0.025  0.050

FOCUS (SHIFT AMOUNT,
MILLIMETERS)

FIG. 23

ASTIGMATISM
DISTORTION

IMG HT

5.15

3.86

2.57

1.29

-20     -10      0      10      20

%DISTORTION

FIG. 24

FIG. 25

FIG. 26

DISTORTION
ASTIGMATIC
FIELD CURVES

IMG HT

S   T          5.15

3.86

2.57

1.29

-0.050  -0.025   0.0    0.025   0.050

FOCUS (SHIFT AMOUNT,
MILLIMETERS)

FIG. 27

ASTIGMATISM
DISTORTION

IMG HT
5.15

3.86

2.57

1.29

-20     -10      0      10     20

%   DISTORTION

FIG. 28

## INTERNATIONAL SEARCH REPORT

International application No.

**PCT/CN2019/119458**

**A. CLASSIFICATION OF SUBJECT MATTER**

G02B 13/00(2006.01)i; G02B 13/18(2006.01)i; G02B 27/00(2006.01)i; G02B 3/04(2006.01)i; G02B 9/64(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, CNKI, WPI, EPODOC: 透镜, 负屈折力, 正屈折力, 镜头, 摄像头, 车, 镜, 奇数, 物面, 像面, 物侧, 像侧, 光学模组, 偶数, 三, 一, 七, 二, 六, first, second, third, sixth, seventh, lens, camera positive, negative, refractive

**C. DOCUMENTS CONSIDERED TO BE RELEVANT**

| Category* | Citation of document, with indication, where appropriate, of the relevant passages | Relevant to claim No. |
|---|---|---|
| X | US 2019302424 A1 (LARGAN PRECISION CO., LTD.) 03 October 2019 (2019-10-03) description paragraphs [0041], [0142]-[0152], [0178]-[0180] | 1-22 |
| X | CN 110320640 A (LARGAN PRECISION CO., LTD.) 11 October 2019 (2019-10-11) description paragraphs [0164],[0247]-[0264],[0416] | 1-22 |
| A | CN 108983388 A (LARGAN PRECISION CO., LTD.) 11 December 2018 (2018-12-11) entire document | 1-22 |
| A | CN 109143535 A (LARGAN PRECISION CO., LTD.) 04 January 2019 (2019-01-04) entire document | 1-22 |
| A | CN 110441886 A (LARGAN PRECISION CO., LTD.) 12 November 2019 (2019-11-12) entire document | 1-22 |
| A | US 2019187443 A1 (ZHEJIANG SUNNY OPTICS CO., LTD.) 20 June 2019 (2019-06-20) entire document | 1-22 |
| A | US 2013107376 A1 (LARGAN PRECISION CO., LTD.) 02 May 2013 (2013-05-02) entire document | 1-22 |

☐ Further documents are listed in the continuation of Box C.      ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 July 2020** | **29 July 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/119458**

| Patent document cited in search report | | | Publication date (day/month/year) | Patent family member(s) | | | Publication date (day/month/year) |
|---|---|---|---|---|---|---|---|
| US | 2019302424 | A1 | 03 October 2019 | TW | 201942630 | A | 01 November 2019 |
| | | | | CN | 110320639 | A | 11 October 2019 |
| CN | 110320640 | A | 11 October 2019 | US | 2019302423 | A1 | 03 October 2019 |
| | | | | TW | 201942620 | A | 01 November 2019 |
| CN | 108983388 | A | 11 December 2018 | US | 2018348484 | A1 | 06 December 2018 |
| | | | | TW | 201903457 | A | 16 January 2019 |
| CN | 109143535 | A | 04 January 2019 | US | 2019285863 | A1 | 19 September 2019 |
| | | | | US | 2018364454 | A1 | 20 December 2018 |
| | | | | TW | 201905526 | A | 01 February 2019 |
| CN | 110441886 | A | 12 November 2019 | CN | 107632371 | A | 26 January 2018 |
| | | | | CN | 110531497 | A | 03 December 2019 |
| | | | | US | 2018231745 | A1 | 16 August 2018 |
| | | | | US | 2019243108 | A1 | 08 August 2019 |
| | | | | US | 2016282589 | A1 | 29 September 2016 |
| | | | | TW | 201606341 | A | 16 February 2016 |
| | | | | CN | 105319681 | A | 10 February 2016 |
| | | | | CN | 107632370 | A | 26 January 2018 |
| | | | | US | 2017343773 | A1 | 30 November 2017 |
| | | | | US | 2016033743 | A1 | 04 February 2016 |
| US | 2019187443 | A1 | 20 June 2019 | CN | 105974561 | A | 28 September 2016 |
| | | | | JP | 2018522266 | A | 09 August 2018 |
| | | | | WO | 2018006592 | A1 | 11 January 2018 |
| US | 2013107376 | A1 | 02 May 2013 | CN | 103091816 | A | 08 May 2013 |
| | | | | TW | 201317610 | A | 01 May 2013 |
| | | | | CN | 202443161 | U | 19 September 2012 |

Form PCT/ISA/210 (patent family annex) (January 2015)